# EUROPEAN PATENT SPECIFICATION

(11) **EP 4 201 658 B1**
(45) Date of publication and mention of the grant of the patent: **25.12.2024**
(21) Application number: 23155557.4
(22) Date of filing: 20.08.2020
(51) Int. Cl.: B29D 30/00, B60C 19/00, B60C 5/14, B60C 9/04, B60C 11/00, B60C 13/00, B60C 15/06, B60C 11/01

(54) **TIRES AND METHODS OF MANUFACTURING A TIRE**
REIFEN UND VERFAHREN ZUR HERSTELLUNG EINES REIFENS
PNEUS ET PROCÉDÉS DE FABRICATION DE PNEU

(30) Priority: 23.08.2019 JP 2019153247
(43) Date of publication of application: 28.06.2023
(62) Divisional of application: 20858653.7
(73) Proprietor: Toyo Tire Corporation, Itami-shi, Hyogo 664-0847 (JP)
(72) Inventor: SUITA, Harunobu, Hyogo, 664-0847 (JP)
(74) Representative: Müller-Boré & Partner Patentanwälte PartG mbB

(56) References cited:
- DE-A1- 10 209 580
- JP-A- 2008 296 552
- US-A1- 2006 164 250
- US-B2- 7 556 074

## Description

### TECHNICAL FIELD

The present invention relates to a tire in which an electronic component is embedded and a manufacturing method of the tire.

### BACKGROUND ART

Conventionally, tires in which an electric component such as RFID is embedded within the rubber structure have been known. With such tires, by an RFID tag embedded in the tire and a reader as an external device carrying out communication, it is possible to perform production control of tires, usage history management, etc. For example, Patent Document 1 shows a tire arranging an electronic component at a boundary surface of two different substances.

Patent Document 1: Japanese Unexamined Patent Application, Publication No. 2008-265750

Document US 7 556 074 B2 describes a tire including a cavity formed therein to receive a removable electronic monitoring module. A mouth of the cavity opens into the inside volume of the tire and is located along a section of a joint of a first layer formed by the assembly of rubber profiled elements adjacent to the inside volume of the tire. The joint can extend radially or circumferentially. The cavity can be formed by inserting an element into the tire body and then leaving the element in place or removing it prior to vulcanization.

Document DE 102 09 580 A1 describes a pneumatic tire with a flat integrated transponder as a mobile data store, wherein the transponder is located inside the tire at ends of the inner lining layer.

Document US 2006/164250 A1 describes a flat IC tag containing memory means capable of data storage and transmission means capable of data transmission. The IC tag has on a surface thereof an unvulcanized rubber having identical properties to the unvulcanized rubber used for an article to which the IC tag is mounted. The opposite surface of the IC tag is mounted to the article before vulcanization. The article is vulcanized in this state to mount the IC tag to the article.

Document JP 2008 296552 A describes a manufacturing method of a tire, wherein the phase positions of three or more elements selected from a plurality of the elements of the tire is adjusted.

### DISCLOSURE OF THE INVENTION

### Problems to be Solved by the Invention

In the technology shown in Patent Document 1, it is not particularly considered at which position in the circumferential direction of the tire to embed an electronic component.

The present invention has been made taking account of the above-mentioned problem, and an object thereof is to provide a tire made by considering the positional relationship between the joint parts of a plurality of tire constituent members and an electronic component.

### Means for Solving the Problems

The claimed invention is defined by the features set forth in the appended independent claims. Additional embodiments of the claimed invention are defined by the dependent claims.

### Effects of the Invention

According to the present invention, it is possible to provide a tire made by considering the positional relationship between the joint parts of a plurality of tire constituent members and an electronic component.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of a tire according to the first embodiment of the present invention;
FIG. 3 is a view showing results of an in-plane distribution simulation of strain energy in a case of applying load to the tire;
FIG. 4A is a view showing an RFID tag covered by a coating rubber sheet, in a tire according to the first embodiment of the present invention;
FIG. 4B is a view showing along the cross section b-b in FIG. 4A;
FIG. 4C is a view showing along the cross section c-c in FIG. 4A;
FIG. 5 is a partially enlarged cross-sectional view of the periphery of an RFID tag in the tire according to the first embodiment of the present invention;
FIG. 6A is a view showing a bead filler after an extrusion molding process in the first embodiment of the present invention;
FIG. 6B is a view showing a process of pasting an RFID tag to the bead filler after the extrusion molding process of the first embodiment of the present invention;
FIG. 6C is a view showing a process of winding the bead filler of the first embodiment of the present invention and joining at a joint part;
FIG. 6D is a view showing an example of a case of the joint part of the bead filler sloping in the tire circumferential direction;
FIG. 7A is a view showing a cross section along the line d-d in FIG. 5, and shows a sloped face abutting joint part which abuts to connect one end side and another end side of the bead filler;
FIG. 7B is a view showing a cross section along the line e-e in FIG. 5, and shows an overlapped joint part which overlaps to connect one end side and another end side of a rubber sheet;
FIG. 7C is a view showing an abutting joint part which abuts to connect one end side and another end side of a rubber member;
FIG. 8A is a view schematically showing a joint part of tread rubber;
FIG. 8B is a view schematically showing a joint part of treat rubber sloping in the tire circumferential direction;
FIG. 9A is a view schematically showing a joint part of an inner liner;
FIG. 9B is a view schematically showing a joint part of an inner liner sloping in the tire circumferential direction;
FIG. 10A is a view simplifying to show a relationship of the positions of the joint parts of the tire constituent members and the arrangement position of the RFID tag in the tire of the first embodiment of the present invention;
FIG. 10B is a view simplifying to show a relationship of the positions of the joint parts of the tire constituent members and the arrangement position of the RFID tag in the tire of a first modified example of the first embodiment of the present invention;
FIG. 10C is a view simplifying to show a relationship of the positions of the joint parts of the tire constituent members and the arrangement position of the RFID tag in the tire of a second modified example of the first embodiment of the present invention;
FIG. 10D is a view simplifying to show a relationship of the positions of the joint parts of the tire constituent members and the arrangement position of the RFID tag in the tire of a third modified example of the first embodiment of the present invention;
FIG. 10E is a view simplifying to show a relationship of the positions of the joint parts of the tire constituent members and the arrangement position of the RFID tag in the tire of a fourth modified example of the first embodiment of the present invention;
FIG. 11 is a view showing an abutting joint part which abuts to connect one end side and another end side of a fiber member coated by rubber;
FIG. 12 is a view simplifying to show a relationship of the positions of the joint parts of the tire constituent members and the arrangement position of the RFID tag in the tire of a fifth modified example of the first embodiment of the present invention;
FIG. 13 is a view showing a half section in a tire-width direction of a tire according to a second embodiment of the present invention;
FIG. 14 is a view simplifying to show a relationship of the positions of the joint parts of the tire constituent members and the arrangement position of the RFID tag in the tire of the second embodiment of the present invention;
FIG. 15 is a view simplifying to show a relationship of the positions of the joint parts of tire constituent members and the arrangement position of the RFID tag in the tire of a modified example of the second embodiment of the present invention;
FIG. 16 is a view showing a half section in a tire-width direction of a tire according to a third embodiment of the present invention;
FIG. 17 is a view simplifying to show a relationship of the positions of the joint parts of tire constituent members and the arrangement position of the RFID tag in the tire of the third embodiment of the present invention;
FIG. 18 is a view showing a half section in a tire-width direction of a tire according to a fourth embodiment of the present invention;
FIG. 19 is a view simplifying to show a relationship of the positions of the joint parts of the tire constituent members and the arrangement position of the RFID tag in the tire of the fourth embodiment of the present invention;
FIG. 20 is a view showing a cross section prior to interposing the RFID tag by coating rubber sheets, in a case of not filling rubber into a spring antenna;
FIG. 21 is a view showing a cross section after interposing the RFID tag by coating rubber sheets, in a case of not filling rubber into a spring antenna;
FIG. 22 is a view showing a cross section after interposing the RFID tag by coating rubber sheets, in a case of not advance filling rubber into a spring antenna;
FIG. 23 is a view showing the RFID tag prior to filling rubber into the spring antenna, in a tire according to a fifth embodiment of the present invention;
FIG. 24 is a view showing the RFID tag after filling rubber into the spring antenna in the tire according to the fifth embodiment of the present invention;
FIG. 25 is a view showing an RFID tag prior to interposing by coating rubber sheets, in the tire according to the fifth embodiment of the present invention; and
FIG. 26 is a view showing an RFID tag interposed by coating rubber sheets, in the tire according to the fifth embodiment of the present invention;

### PREFERRED MODE FOR CARRYING OUT THE INVENTION

### <First Embodiment>

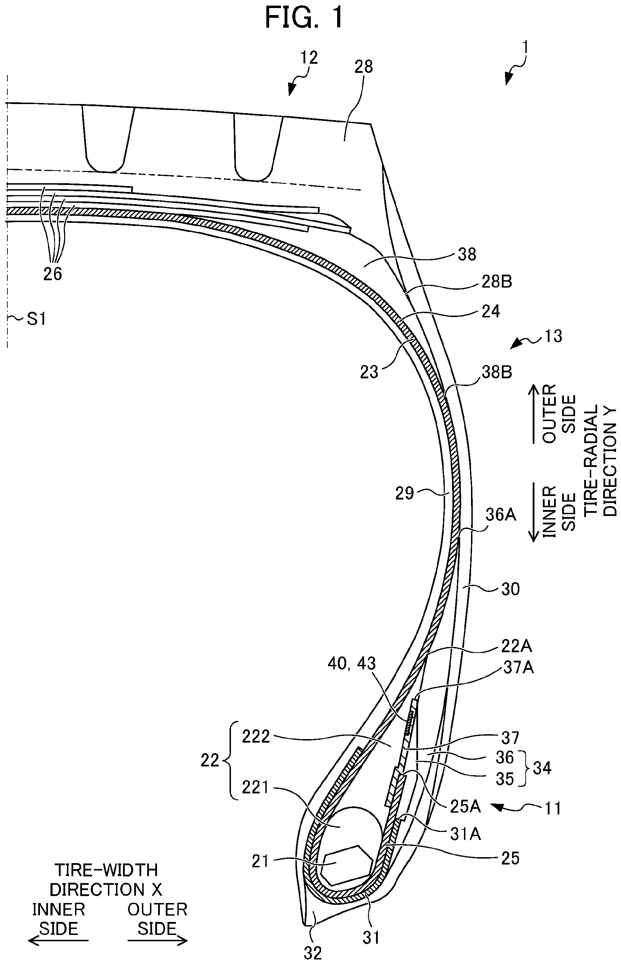

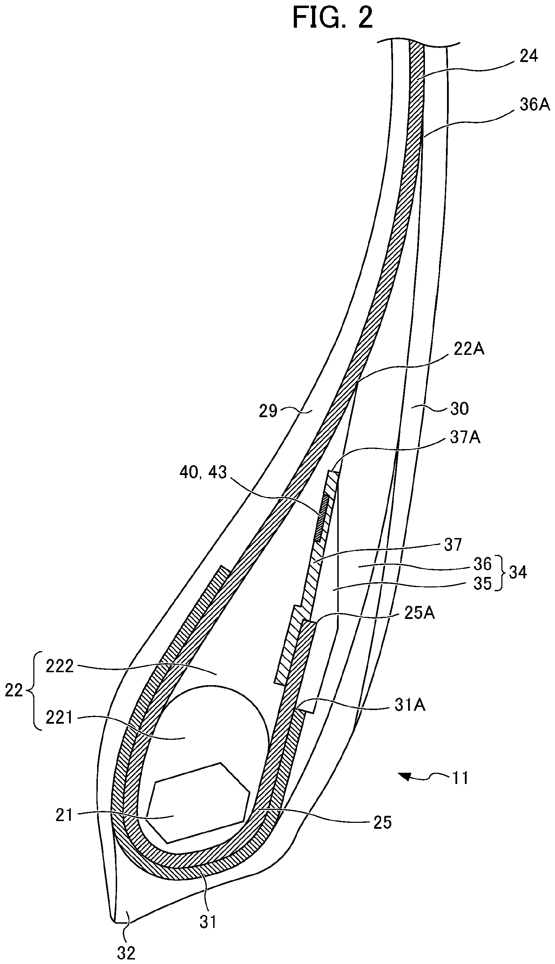

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side of tire-radial direction is a direction distancing from the tire rotation axis, and is the upper side of the paper plane in FIG. 1. Inner-side of tire-radial direction is a direction approaching the tire rotation axis, and is the lower side of the paper plane in FIG. 1. The same also applies to FIGS. 2,13, 16 and 18.

The tire 1 is a tire for trucks and buses, for example, and includes a pair of beads 11 provided at both sides in the tire width direction, tread 12 forming a contact patch with the road surface, and a pair of sidewalls 13 which extends between the pair of beads 11 and the tread 12.

The bead 11 includes an annular bead core 21 formed by wrapping around several times bead wires made of metal coated with rubber, and a bead filler 22 of tapered shape extending to the outer side in the tire-radial direction of the bead core 21. The bead filler 22 is configured by a first bead filler 221 which covers the outer circumference of the bead core 21, and a second bead filler 222 which is arranged on the outer side in the tire-radial direction of the first bead filler 221. The second bead filler 222 is configured from rubber with a modulus higher than an inner liner 29 and side wall rubber 30 described later. Then, the first bead filler 221 is configured from rubber of an even higher modulus than the second bead filler 222. It should be noted that the first bead filler 221 may be a form not covering the outer circumference of the bead core 21, if at least a part thereof is arranged on the outer side in the tire-radial direction of the bead core 21. In addition, the bead filler 22 may be formed from rubber of one type. In other words, it may not necessarily be divided into the first bead filler 221 and second bead filler 222. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12. As shown in FIG. 1, the carcass ply 23 includes a ply body 24 which extends from one bead core to the other bead core, and extends between the tread 12 and bead 11, and a ply folding part 25 which is folded around the bead core 21. Herein, a folding end 25A of the ply folding part 25 is positioned more to an inner side in the tire-radial direction than a tire-radial direction outside end 22A of the bead filler 22. The carcass ply 23 is configured by a plurality of ply cords extending in a tire-width direction. In addition, a plurality of ply cords is arranged side by side in a tire circumferential direction. This ply cord is configured by a metal steel cord, or an insulated organic fiber cord such as polyester or polyamide, or the like, and is covered by rubber.

In the tread 12, a plurality of layers of steel belts 26 is provided in the outer side in the tire radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although four layers of steel belts 26 are provided, the number of layered steel belt 26 is not limited thereto.

The tread rubber 28 is provided at the outer side in the tire-radial direction of the steel belt 26. A tread pattern (not illustrated) is provided to the outer surface of the tread rubber 28, and this outer surface serves as a contact surface which contacts with the road surface.

In the vicinity of the outer side in the tire-width direction of the tread 12, in a region between the carcass ply 23, and the steel belts 26 / tread rubber 28, a shoulder pad 38 is provided. This shoulder pad 38 extends until a region of the outer side in the tire-radial direction of the side wall 13, and part thereof forms an interface between side wall rubber 30 described later. In other words, in the region of the outer side in the tire-radial direction of the side wall 13, a part of the shoulder pad 38 is present on the inner side in the tire width direction of the side wall rubber 30. The shoulder pad 38 consists of a rubber member having cushioning, and exhibits a cushion function between the carcass ply 23 and steel belt 26. In addition, since the shoulder pad 38 consists of rubber having a characteristic of low heat buildup, it is possible to suppress heat generation effectively, by extending until the side wall 13.

In the bead 11, sidewall 12 and tread 13, an inner liner 29 as a rubber layer constituting an inner wall surface of the tire 1 is provided to the tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire exhibiting a cushioning action, and usually flexible rubber having fatigue resistance is adopted therein.

On the inner side in the tire radial direction of the carcass ply 23 provided around the bead core 21 of the bead 11, a steel chafer 31 serving as a reinforcement ply is provided so as to cover at least part of the carcass ply 23. The steel chafer 31 also extends to the outer side in the tire-width direction of the ply folding part 25 of the carcass ply 23, and an end part 31A of this steel chafer 31 is positioned more to the inner side in the tire-width direction than the folding end 25A of the carcass ply 23. This steel chafer 31 is a metal reinforcement layer configured by metal steel cords, and is covered by rubber.

Rim strip rubber 32 is provided at the inner side in the tire-radial direction of the steel chafer 31. This rim strip rubber 32 is arranged along the outer surface of the tire, and connects with the side wall rubber 30. This rim strip rubber 32 and side wall rubber 30 are rubber members constituting the outer surface of the tire.

Then, at the outer side in the tire-radial direction of the end part 31A of the chafer 31, which is at the outer side in the tire-width direction of the folding part 25 of the carcass ply 23 and bead filler 22, a first pad 35 is provided. This first pad 35 is provided to the outer side in the tire-width direction of at least the folding end 25A of the carcass ply 23. The outer side in the tire-radial direction of the first pad 35 is formed so as to taper as approaching the outer side in the tire-radial direction.

Furthermore, a second pad 36 is provided so as to cover the outer side in the tire-width direction of the first pad 35. In more detail, the second pad 36 is provided so as to cover the outer side in the tire-width direction of part of the steel chafer 31, the first pad 35, part of the second bead filler 222, and part of the ply body 24 of the carcass ply 23. Then, the side-wall rubber 30 is arranged at the outer side in the tire-width direction in a region of the outer side in the tire-radial direction of the second pad 36, and the rim strip rubber 32 is arranged at an outer side in the tire-width direction in a region on the inner side in the tire-radial direction of the second pad 36. In other words, the second pad 36 is provided between a first pad 35, etc. and the rim strip rubber 32 and sidewall rubber 30 which are members constituting the outer surface of the tire (tire-width direction outside surface constituting rubber members). In other words, the second pad 36 is provided on a tire inner cavity side of the rim strip rubber 32 and sidewall rubber 30, which are tire-width direction outside surface constituting rubber members. It should be noted that the tire-radial direction outside end 36A of the second pad 36 is preferably arranged more to the inner side in the tire-radial direction than a portion which is the tire widest part of the sidewall 13, as shown in FIG. 1. Then, the tire-radial direction outside end 36A of this second pad 36 is formed so as to taper as approaching the outer side in the tire-radial direction.

Herein, the first pad 35 and second pad 36 constitute the pad member 34, and this pad member 34 is configured by rubber of higher modulus than the modulus of the tire-radial direction outside portion of the bead filler 22 filler (second bead filler 222. In more detail, the second pad 36 is configured by rubber of higher modulus than the second bead filler 222, and the first pad 35 is configured by rubber of even higher modulus than the second pad 36. The first pad 35 and second pad 36 have a function of mitigating sudden distortion caused by the local rigidity point of change at the folding end 25A of the carcass ply 23 and the end part 31A of the steel chafer 31.

The rubber sheet 37 serving as a reinforced rubber sheet is arranged in the vicinity of the folding end 25A of the carcass ply 23, between the bead filler 22 and pad member 34. The rubber sheet 37 is arranged so as to cover the folding end 25A of the carcass ply 23 from the inner side in the tire-width direction. The rubber sheet 37 is configured from rubber of higher modulus than the second bead filler 222. More preferably, it is configured from rubber of a modulus substantially equal to that of the first pad 35.

Generally, at the folding end 25A of the carcass ply 23, stress tends to concentrate. However, by providing the rubber sheet 37 serving as the aforementioned reinforced rubber sheet, it becomes possible to effectively suppress the concentration of stress. It should be noted that, although the pad member 34 is configured from the first pad 35 and second pad 36 in the present embodiment, the pad member 34 may be configured from one member. However, as mentioned above, by configuring the pad member 34 from the first pad 35 and second pad 36, and further adopting a configuration arranging the rubber sheet 37, it is possible to more effectively suppress the concentration of stress.

It should be noted that the position of the tire-radial direction outside end 37A of the rubber sheet 37 in the present embodiment is located more to the outer side in the tire-radial direction than the tire-radial direction outside end 22A of the bead filler 22. However, the position of the tire-radial direction outside end 37A of the rubber sheet 37 may be made to substantially match the position of the tire-radial direction outside end 22A of the bead filler 22. It should be noted that the rubber sheet 37 preferably adopts a form arranged so as to cover the folding end 25A of the carcass ply 23 from the inner side in the tire-width direction as shown in FIG. 1; however, a configuration covering the folding end 25A of the carcass ply 23 from the outer side in the tire-width direction may be adopted. Even in this case, it is possible to mitigate the concentration of stress. It should be noted that, considering the workability of the process of arranging the rubber sheet 37, and suppressing the influence on the thickness at the periphery of the bead 11, it is more preferable to use the rubber sheet 37 of substantially constant thickness such as that shown in FIGS. 1 and 2 as the rubber sheet 37, and establish a state covering the folding end 25A of the carcass ply 23 from either one of the tire-width direction inner side or tire-width direction outer side, by such a rubber sheet 37.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is established at an antenna length optimized according to the frequency band, etc. to be used. In a storage part inside the RFID chip, identification information such as a manufacturing number and part number is stored.

FIG. 2 is an enlarged cross-sectional view showing the vicinity of an embedded part of the RFID tag 40 in the tire 1 of FIG. 1. As shown in FIGS. 1 and 2, the rubber sheet 37 and RFID tag 40 are arranged between the bead filler 22 and pad member 34. Then, the RFID tag 40 is arranged between the bead filler 22 and the rubber sheet 37.

It should be noted that, if establishing the modulus of the second pad 36 as a reference, the side-wall rubber 30 is preferably established with a modulus of 0.4 to 0.6 times that of the second pad 36. In addition, the first pad 35 is preferably established with a modulus of 1.1 to 1.2 times that of the second pad 36. In addition, the second bead filler 222 is preferably established with a modulus of 0.7 to 0.8 times that of the second pad. By establishing such a modulus, it is possible to keep a balance of flexibility as a tire and rigidity in the vicinity of the bead 11.

Then, the rubber sheet 37 is preferably established with a modulus 1.1 times to 1.2 times that of the second pad 36. In other words, the modulus of the rubber sheet 37 preferably is established with substantially equal modulus to a portion of the pad member 34 at least covering the folding end 25A of the carcass ply 23 (first pad 35).

In this way, the modulus of the portion of the pad member 34 (first pad 35) at least covering the folding end 25A of the carcass ply 23 and the modulus of the rubber sheet 37 both are higher than the modulus of the rubber member in the surrounding thereof. By adopting a configuration interposing the folding end 25A of the carcass ply 23 by rubber members of high modulus in this way, it becomes possible to effectively suppress the concentration of stress in this portion. Then, since the RFID tag 40 is arranged at the rubber sheet 37 which is a rubber member of high modulus, the deformation amount of the RFID tag 40 becomes smaller even in a case of the tire 1 bending. Consequently, it is possible to appropriately protect the RFID tag 40. It should be noted that, in a case of configuring the pad member 34 from one member, it is preferable for the modulus of the pad member 34 to be set higher than at least the modulus of the side-wall rubber 30. More preferably, the modulus of the pad member 34 is set to be higher than the modulus of the side-wall rubber 30 and second bead filler 222. It should be noted that the modulus of the pad member 34 may be set equal to, or lower than, the modulus of the rubber sheet 37. It should be noted that the modulus indicates 100% elongation modulus (M100) under a 23°C atmosphere, measured in accordance with "3.7 stress at a given elongation, S" of JIS K6251:2010.

Herein, normally, in a case of the boundary surface of two substances being a surface extending from the folding end 25A of the carcass ply 23, distortion tends to occur at this surface. However, in the present embodiment, since the rubber sheet 37 is arranged so as to cover the folding end 25A of the carcass ply 23, more to the outer side in the tire-radial direction than the folding end 25A of the carcass ply 23 becomes a portion which hardly receives the influence of distortion.

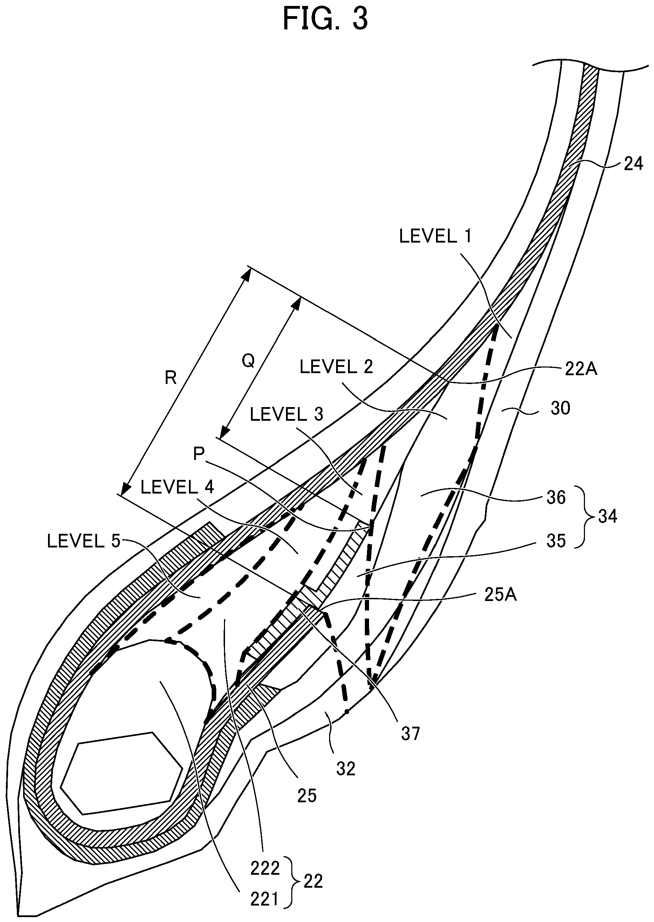

FIG. 3 is a view showing the results of in-plane distribution simulation of strain energy, in a case of assembling the tire to a rim, and applying 100% load. The enlarged cross-sectional view shown in FIG. 3 displays by dividing the region in five, according to the magnitude of the strain energy. Herein, a region having the highest strain energy is defined as level 5, a region having high strain energy is defined as level 4, a region in which the strain energy somewhat declined is defined as level 3, a region in which the strain energy further declined is defined as level 2, and the region in which the strain energy declined the most is defined as level 1. FIG. 3 displays by dividing the regions with bold dotted lines as the boundary.

At the boundary surface between the bead filler 22 and pad member 34 and the vicinity thereof, the region more to the outer side in the tire-radial direction than the folding end 25A of the carcass ply 23 becomes mostly level 2 ~ 3, and the strain energy is small. Consequently, this region becomes a preferred region upon arranging the RFID tag 40. It should be noted that, in the present embodiment (refer to FIG. 2), although the rubber sheet 37 extends more to the outer side in the tire-radial direction than this simulation model, since the basic configurations of arranging and reinforcing the rubber sheet 37 are the same, the strain energy in the vicinity of the rubber sheet 37 becomes equal to FIG. 3, or smaller.

It should be noted that, in the tire-width direction cross-sectional view shown in FIGS. 1 to 3, when defining the distance from the tire-radial direction outside end 22A of the bead filler 22 until the folding end 25A of the carcass ply 23 as a reference distance R, the RFID tag 40 is preferably arranged within a region (region Q) of range Q from the position of the tire-radial direction outside end 22A of the bead filler 22 until a position P (refer to FIG. 3) which is 60% of the reference distance towards the folding end 25A of the carcass ply 23. Within the region of this range Q, the strain energy of the boundary surface between the bead filler 22 and the pad member 34 and the vicinity thereof become mostly level 2, and upon arranging the RFID tag 40, becomes a very preferable region. Consequently, it is preferable to extend the rubber sheet 37 until this region, and arrange the RFID tag 40 in this region.

It should be noted that, so long as within the region of this range Q, it will be a position distanced a certain extent from the bead core 21 made of metal, which has a possibility of adversely affecting communication. Herein, the bead core 21 is formed in a ring shape by winding in layers of metal bead wires, and thus is a metal member having a particularly high possibility of adversely affecting communication. In addition, the vicinity of the rubber sheet 37 also hardly receives influence relative to external damage, due to being a position distanced a certain extent from the outer surface of the tire 1. Furthermore, since the outer side in the tire-width direction is protected by the pad member 34 having high modulus, it hardly receives influence relative to external damage also from this point.

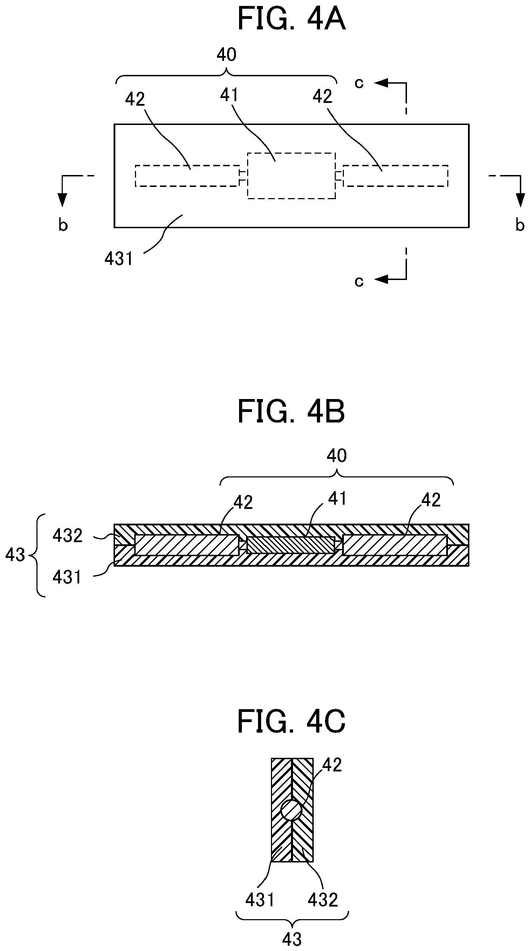

Herein, the RFID tag 40 is covered by the coating rubber sheets 431, 432 constituting the protective member 43. In other words, in the present embodiment, the protective member 43 is configured from the two coating rubber sheets 431, 432. This point will be explained while referencing FIGS. 4A to 4C. FIG. 4A is a view showing the RFID tag 40 covered by the coating rubber sheets constituting the protective member 43. In FIG. 4A, the RFID tag 40 is covered to be hidden by the coating rubber sheet 431 described later. FIG. 4B is a cross-sectional view along the line b-b in FIG. 4A, and FIG. 4C is a cross-sectional view along the line c-c in FIG. 4A.

The RFID tag 40 includes an RFID chip 41 and antenna 42 for performing communication with external equipment. As the antenna 42, a coil-shaped spring antenna, plate-shaped antenna, and various types of rod-shaped antennas can be used. When considering the communicability and flexibility, a coil-shaped spring antenna is the most preferable.

As the rubber employed in the protective member 43, rubber of lower modulus than at least the rubber sheet 37 is used. For example, the coating rubber sheets 431, 432 constituting the protective member 43 are preferably established with a modulus of 0.5 to 0.8 times that of the rubber sheet 37. However, in order to impart a certain level of strength, it is preferable to use rubber of higher modulus than the side-wall rubber 30. More preferably, it is preferable to establish with a modulus substantially equal to the second bead filler 222. Alternatively, rubber of lower modulus than the second bead filler 222 may be used in consideration of effectively absorbing the deformation amount.

As mentioned above, by arranging the RFID tag 40 near the rubber sheet 37 having high modulus, even in the case of the tire 1 bending, it becomes possible to suppress the deformation amount at the peripheral part of the RFID tag 40. Furthermore, by covering the RFID tag 40 using the protective member 43 having low modulus, it becomes possible to absorb deformation of the rubber sheet 37 in the protective member 43, so as not to directly transmit to the RFID tag 40.

It should be noted that the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a coating rubber sheet in the vulcanized state may be used. The coating rubber sheet in a vulcanized state does not plastically deform as would raw rubber, and thus can appropriately protect the RFID tag 40. However, if considering the pasting workability during the manufacturing process, or stabilizing of the rubber structures by integrating with other rubber members when vulcanizing, it is more preferable to use a rubber sheet in the state prior to vulcanization as the protective member 43.

In addition, as the protective member 43, an organic fiber layer from polyester fibers or polyamide fibers may be provided. It is also possible to embed an organic fiber layer in the two coating rubber sheets 431, 432.

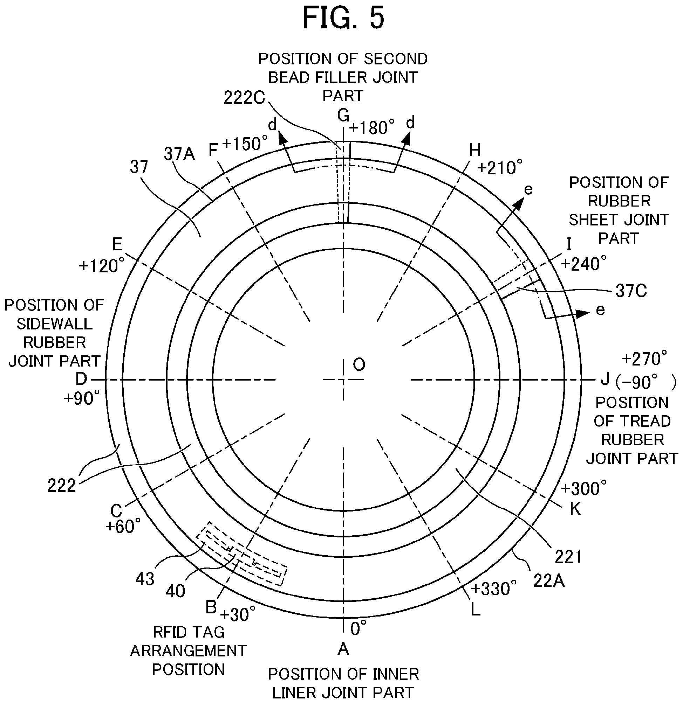

Next, a manufacturing process of the tire 1 of the present embodiment will be explained using FIGS. 5 to 7. FIG. 5 is a view of the bead filler 22 in the manufacturing process when viewing from the outer side in the tire-width direction, and is a view showing a state of pasting the RFID tag 40 covered by the protective member 43 and the rubber sheet 37 to the bead filler 22. Herein, since the RFID tag 40 covered by the protective member 43 is covered by the rubber sheet 37, it is illustrated by dotted line.

The tire 1 includes a plurality of annular tire constituent members respectively having joint parts formed by one end side and another end side of a member being joined. In the present embodiment, at least the second bead filler 222 and the rubber sheet 37 are included in the annular tire constituent members having such a joint part. In addition, the inner liner 29 (only position of joint part illustrated in FIG. 5) is also included in the annular tire constituent members having such a joint part.

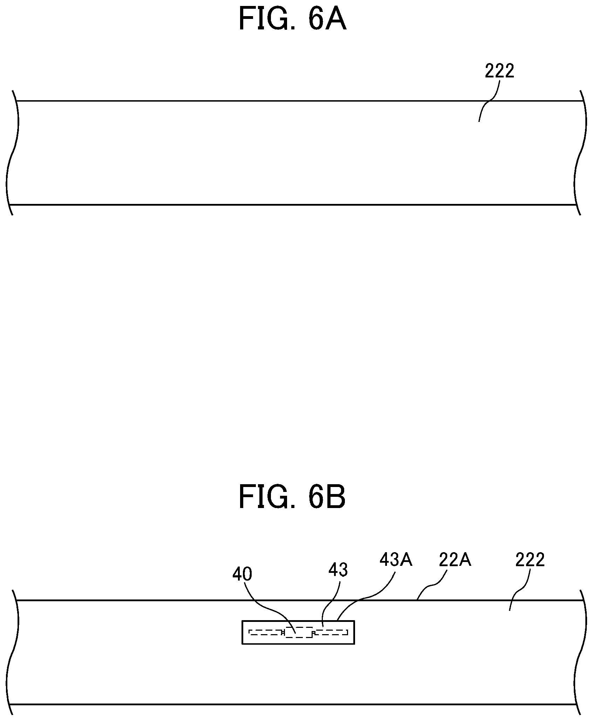

Regarding the side of the bead filler 22, the second bead filler 222 configuring the bead filler 22 is molded as a straight elongated rubber member as shown in FIG. 6A by extrusion molding, for example. Then, as shown in FIG. 6B, the protective member 43 covering the RFID tag 40 is pasted to the second bead filler 222, which is still a straight a rubber member. At this time, the protective member 43 is raw rubber prior to vulcanization, and the protective member 43 can be pasted to the second bead filler 222 using the adhesiveness thereof. Alternatively, in the case of the adhesiveness being low or the like, the protective member 43 may be pasted to the second bead filler 222 using an adhesive or the like.

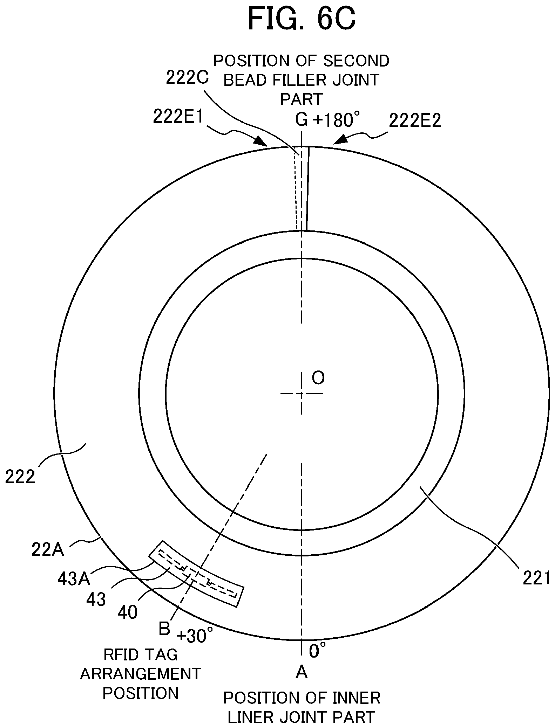

The linear elongated rubber member constituting the second bead filler 222 is subsequently wound up and formed into an annular shape as shown in FIG. 6C. In more detail, the second bead filler 222 is formed in an annular shape by one end side 222E1 and the other end side 222E2 of the elongated rubber member being joined at the joint part 222C.

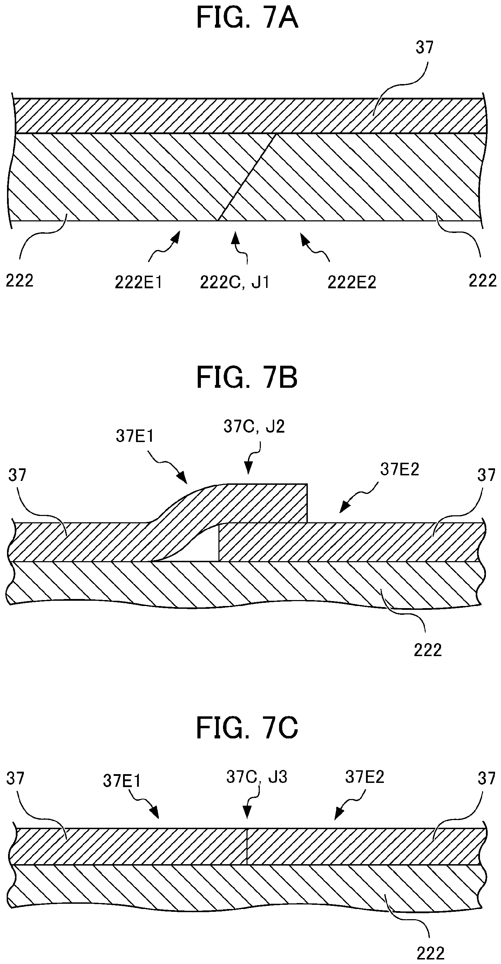

FIG. 7A is a view showing a cross section of the joint part 222C of the second bead filler 222, and shows a cross section along the line d-d in FIG. 5. At the end face of one end side 222E1 and the end face of the other end side 222E2 of the elongated rubber member constituting the second bead filler 222, sloped faces of shapes corresponding to each other are formed. Then, the joint part 222C of the second bead filler 222 is configured from a sloped face abutting joint part J1 at which the sloped face of this one end side 222E1 and the sloped face of the other end side 222E2 abut to join.

The second bead filler 222 is formed in an annular shape, by the one end side 222E1 and other end side 222E2 of the elongated rubber member being joined by such a sloped face abutting joint part J1. It should be noted that the second bead filler 222 may be formed in an annular shape by circling the outer circumferential of the first bead filler 221 already formed in an annular shape, as shown in FIG. 6C. In addition, in the case of the first bead filler 221 and second bead filler 222 being integrally formed, the bead filler 22 consisting of the first bead filler 221 and second bead filler 222 formed integrally may be connected by a joint part of a similar structure as the joint part 222C to form an annular shape.

After the second bead filler 222 is formed in an annular shape, the rubber sheet 37 is pasted to the outside surface in the tire-width direction of the second bead filler 222 as shown in FIG. 5. The rubber sheet 37 is pasted to the surface of the second bead filler 222, so as to cover the RFID tag 40 which is covered by the protective member 43. The RFID tag 40 covered by the protective member 43 is thereby sandwiched by the second bead filler 222 and rubber sheet 37. In other words, the RFID tag 40 (including a state integrally covered by the protective member 43) is arranged in the sandwiched state at the boundary of the second bead filler 222 and rubber sheet 37. At this time, since the second bead filler 222 and rubber sheet 37 are in the state of raw rubber prior to vulcanization, it is possible to paste using the adhesiveness thereof. Alternatively, in the case of the adhesiveness being low or the like, it may be pasted using an adhesive or the like.

It should be noted that the elongated rubber member forming the rubber sheet 37 may be a straight rubber member formed by extrusion molding. In this case, upon pasting to the second bead filler 222, the straight rubber member is pasted while winding so as to make an annular shape.

The rubber sheet 37 is formed in an annular shape by the one end side 37E1 and another end side 37E2 of the elongated rubber member being joined at the joint part 37C. FIG. 7B is a view showing a cross section of the joint part 37C of the rubber sheet 37, and shows a cross section along the line e-e in FIG. 5. The joint part 37C of the rubber sheet 37 is configured from an overlapped joint part J2 in which the one end side 37E1 and the other end side 37E2 of the elongated rubber member constituting the rubber sheet 37 are overlapped to join.

The rubber sheet 37 is formed in an annular shape by the one end side 37E1 and the other end side 37E2 of the elongated rubber member being joined by such an overlapped joint part J2 .

Herein, the joint part 37C of the rubber sheet 37 of thin thickness is preferably formed by the aforementioned overlapped joint part J2 in order to secure contact area between the one end side 37E1 and the other end side 37E2 and obtain bonding strength of the joint part 37C. However, as the joint part 37C of the rubber sheet 37, it is possible to adopt the sloped face abutting joint part J1 such as that shown in FIG. 7A, or the end face abutting joint part J3 at which the end faces of the one end side 37E1 and the other end side 37E2 (end faces of substantially right angle relative to longitudinal direction of the member) abut to join such as that shown in FIG. 7C.

In addition, for the joint part of the second bead filler 222, it is also possible to adopt the overlapped joint part J2 or the end face abutting joint part J3, in place of the sloped face abutting joint part J1. It should be noted that, for the joint part of other tire constituent members such as the inner liner 29, it is possible to adopt by selecting a joint part of the appropriate structure from among joint parts such as the sloped face abutting joint part J1, overlapped joint part J2 and end face abutting joint part J3.

It should be noted that the sloped face abutting joint part J1 increases the contact area of the joining part to raise the adhesive strength, by establishing the joining part as a sloped face. The sloped face abutting joint part J1 is suitably used as a joint part of the tire constituent members of relatively thick thickness. For example, it is often used as the joint part of the second bead filler 222 or tread rubber 28. In addition, the sloped face abutting joint part J1 is used also as the joint part of the sidewall rubber 30 and/or inner liner 29.

The overlapped joint part J2 is particularly suitably used as the joint part of rubber members of thin thickness due to being able to secure the contact area of the joining part and raise the bonding strength of the joint part. For example, it is often used as the joint part of the rubber sheet 37. For the overlapped joint part J2, since the joining part becomes thicker than other portions, considering the influence on uniformity, it is necessary to set the position of the joint part.

The end face abutting joint part J3 has lower adhesion of the joint part than the overlapped joint part J2. However, the influence on the uniformity is less than the overlapped joint part J2.

It should be noted that even if being the sloped face abutting joint part J1 or end face abutting joint part J3, an influence on uniformity can arise due to misalignment of the joining part caused by dimensional tolerance of members and errors in manufacture, variation in thickness in the vulcanization process, etc. In particular, in the case of the sloped face abutting joint part J1 used in the tire constituent members having relatively thick thickness, it is necessary to set the position of the joint part by considering the influence on uniformity.

Upon the characteristics of each of the aforementioned joint parts being considered, a joint part of the appropriate type is selected as each of the joint parts of respective tire constituent members consisting of rubber members.

Herein, as shown in FIG. 5, the RFID tag 40 of the present embodiment is arranged at a position B rotated 30 degrees clockwise, when defining the rotational position A of the joint part of the inner liner 29 as 0 degrees, in the case of setting the rotational axis O of the tire 1 as a rotation reference. In addition, the joint part 222C of the second bead filler 222 is arranged at the position G of +180 degrees, and the joint part 37C of the rubber sheet 37 is arranged at the position I of +240 degrees. In addition, in the case of the sidewall rubber 30 and tread rubber 28 having the aforementioned such joint parts, the joint part of the sidewall rubber 30 is arranged at the position D of +90 degrees, and the joint part of the tread rubber 28 is arranged at the position J of 270 degrees (-90 degrees).

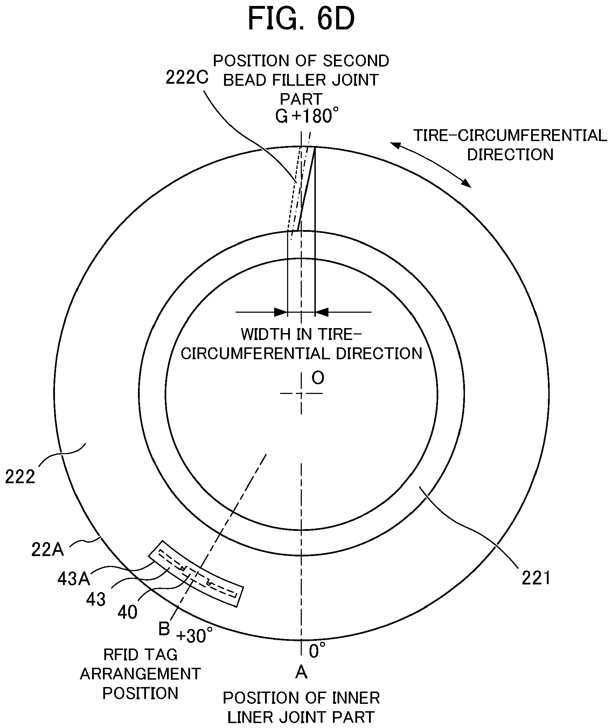

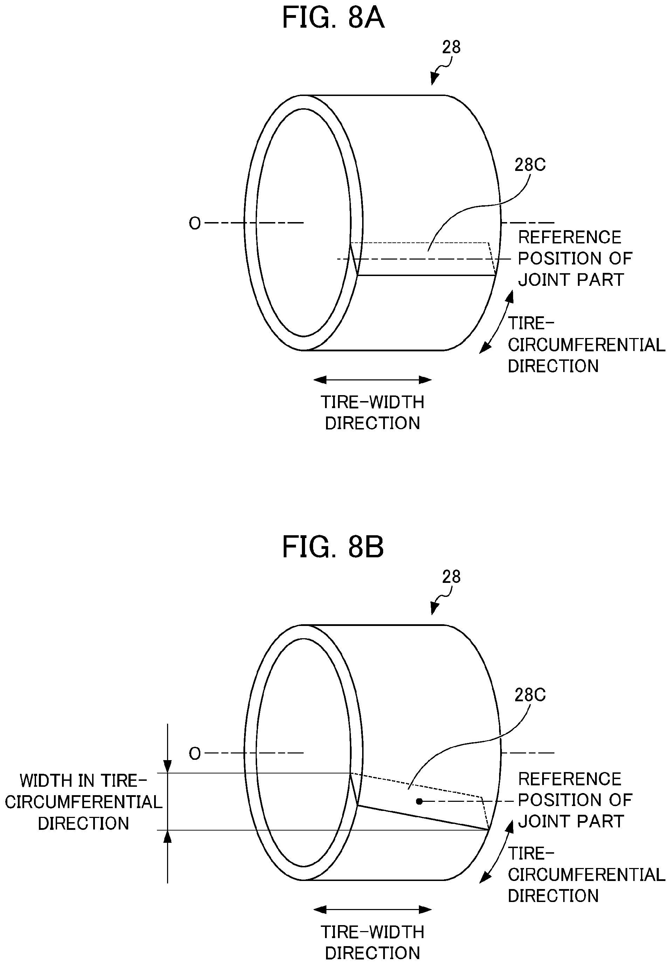

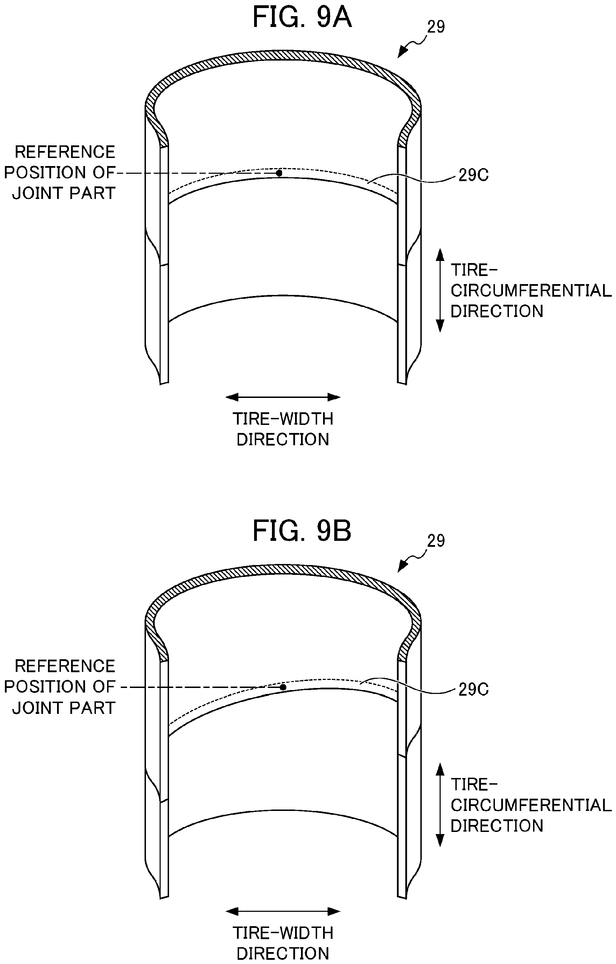

It should be noted that, in the case of the joint part extending in the tire radial direction of the tire constituent members arranged near the sidewall 13 and bead 11 as in the joint part 222C of the second bead filler 222 shown in FIG. 6C not sloping to the tire circumferential direction relative to a line from the rotational axis O toward the outer side in the tire-radial direction, the center position of the joint part is the reference position of the joint part, and this position is considered as the rotational position of the joint part (position of the joint part). On the other hand, in the case of the joint part extending in the tire radial direction of the tire constituent members arranged near the sidewall 13 and bead 11 as in the joint part 222C of the second bead filler 222 shown in FIG. 6D sloping to the tire circumferential direction relative to a line from the rotational axis O toward the outer side in the tire-radial direction, upon taking account of this slope, the center position of the joint part (for example, center of the width in the tire circumferential direction of the joint part) is the reference position of the joint part, and this position is considered as the rotational position of the joint part (position of the joint part). In addition, in the case of the joint part extending in the tire-width direction of a tire constituent member arranged in the vicinity of the tread 12, as in the joint part 28C of the tread rubber 28 schematically shown in FIG. 8A, not sloping to the tire-circumferential direction relative to a line parallel to the rotational axis O, the center of the joint part is the reference position of the joint part, and this position is considered as the rotational position of the joint part (position of the joint part). On the other hand, in the case of the joint part extending in the tire-width direction of a tire constituent member arranged in the vicinity of the tread 12, as in the joint part 28C of the tread rubber 28 schematically shown in FIG. 8B, sloping to the tire-circumferential direction relative to a line parallel to the rotational axis O, upon taking account of this slope, the center position of the joint part (for example, center position of the width in the tire circumferential direction of the joint part) is the reference position of the joint part, and this position is considered as the rotational position of the joint part (position of the joint part). In addition, in the case of the joint part extending in the tire-width direction of a toroidal tire constituent member, as in the joint part 29C of the inner liner 29 schematically shown to be cutaway in FIG. 9A, not sloping in the tire-circumferential direction relative to a line parallel to the rotational axis O which is not shown, the center of the joint part is the reference position of the joint part, and this position is considered as the rotational position of the joint part (position of the joint part). On the other hand, in the case of the joint part extending in the tire-width direction of a toroidal tire constituent member, as in the joint part 29C of the inner liner 29 schematically shown to be cutaway in FIG. 9A, not sloping in the tire-circumferential direction relative to a line parallel to the rotational axis O which is not shown, upon taking account of this slope, the center position of the joint part (for example, center position of the width in the tire circumferential direction of the joint part) is the reference position of the joint part, and this position is considered as the rotational position of the joint part (position of the joint part). In this way, the substantial center position of the joint part of a tire constituent member is considered as the rotational position of the joint part (position of the joint part).

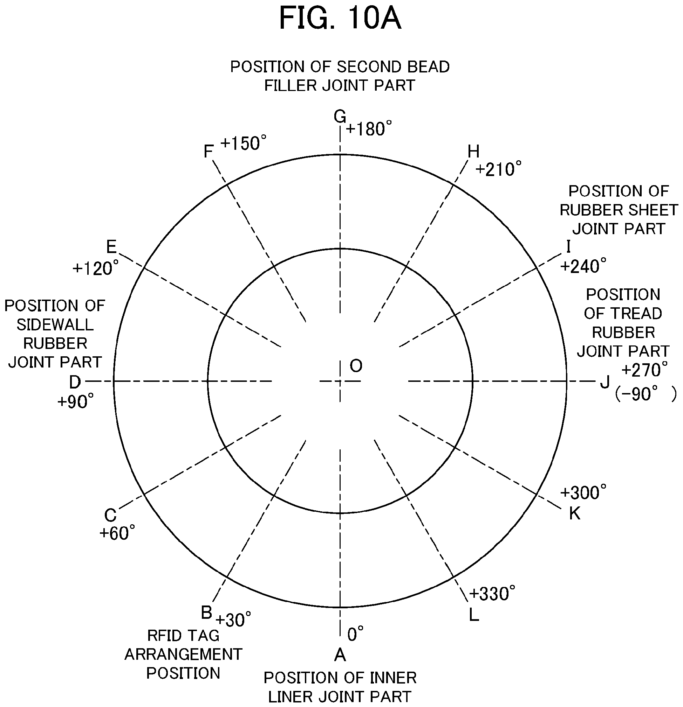

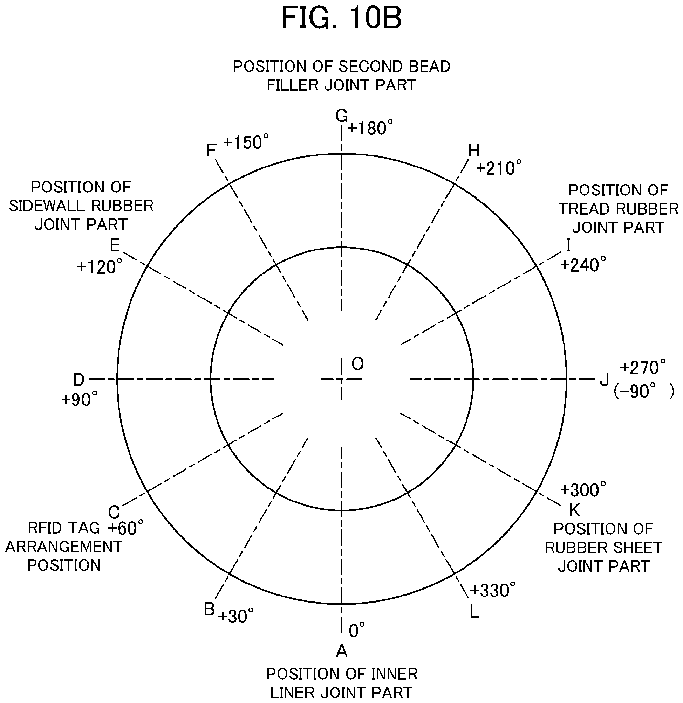

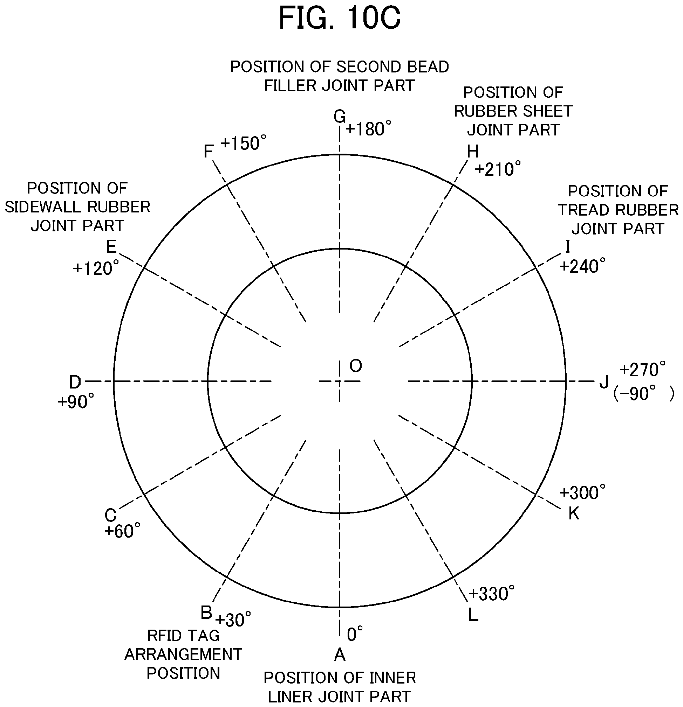

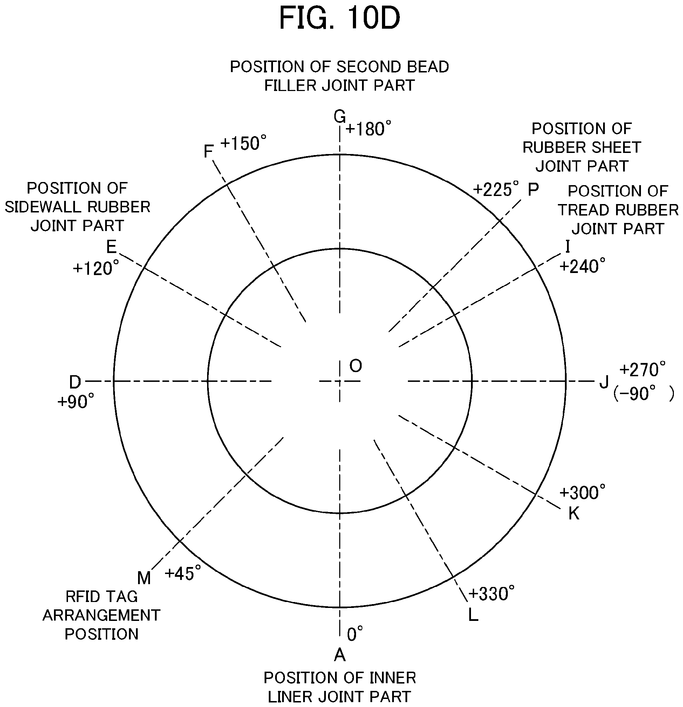

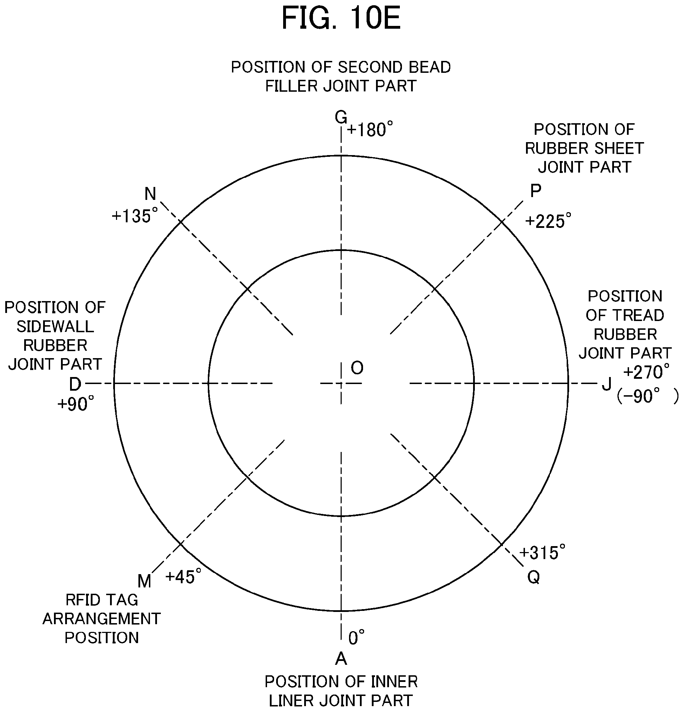

Next, in the present embodiment, the reason for setting the positions of the joint parts of the plurality of tire constituent members and the arrangement position of the RFID tag 40 at such arrangement positions will be explained. It should be noted that, in the present disclosure, in the case of expressing the arrangement position of joint parts and the like by angles having a positive and negative symbols, unless there is a special explanation, it shall indicate an angle based on the aforementioned reference, i.e. angle of clockwise rotation when defining the rotational position A of the joint part of the inner liner 29 as 0 degrees, in the case of setting the rotational axis O of the tire 1 as the rotation reference. FIG. 10 is a view simplifying to show a relationship between the position of the joint part of the plurality of tire constituent members of the present embodiment and the arrangement position of the RFID tag 40.

The tire 1 includes a plurality of annular tire constituent members consisting of rubber members, such as the inner liner 29, bead filler 22, sidewall rubber 30, tread rubber 28, pad member 34, shoulder pad 38, rim strip rubber 32 and rubber sheet 37. Then, these tire constituent members often have a joint part formed by one end side and another end side of an elongated rubber member being joined. It should be noted that the inner liner 29 is arranged at the tire inner cavity side of the ply body 24 of the carcass ply 23, and other rubber members are arranged at the tire outer surface side of the ply body 24 of the carcass ply 23.

When considering the uniformity of the tire 1, it is preferable for the position of each joint part of the plurality of tire constituent members not to overlap. In particular, the positions of joint parts of tire constituent members having overlap in the thickness direction of a layer constituting the tire 1 preferably do not overlap.

Herein, since the inner liner 29 is a rubber member covering the entirety of the tire inner cavity surface, other tire constituent members such as the sidewall rubber 30, tread rubber 28 and bead filler 22 will be arranged at the outer surface side of the inner liner 29. In other words, the inner liner 29 have an overlap with basically all other tire constituent members in the thickness direction of the layers constituting the tire. Consequently, the joint part of the inner liner 29 is preferably arranged at a position distanced as much as possible from the joint part of other tire constituent members.

In addition, the RFID tag 40 is preferably arranged at a position such that does not overlap with the position of the joint parts of tire constituent members. In particular, the RFID tag 40 is preferably arranged at a position as distanced as possible from the position of the joint part of the tire constituent member contacted or adjacent to the RFID tag 40. On the other hand, in a case of arranging the RFID tag 40 at the tire outer surface side of the ply body 24 of the carcass ply 23, or the like, even if the arrangement position of the RFID tag 40 is near the joint part of the inner liner 29, a real problem hardly arises.

Therefore, in the present embodiment, the RFID tag 40 is arranged within a predetermined range with the position of the joint part of the inner liner 29 as a reference. This predetermined range is a range less than +/-90 degrees, when defining the rotational position of the joint part of the inner liner 29 as 0 degrees, in the case of the rotational axis O of the tire 1 being the rotation reference. In other words, it is a region greater than -90 degrees (+270 degrees) and less than +90 degrees. In other words, in the present embodiment, the RFID tag 40 is arranged within a range having an angle formed by the joint part of the inner liner 29 around the tire rotational axis less than 90 degrees, with the position of the joint prat of the inner liner 29 as a reference. In the present embodiment, the RFID tag 40 is arranged at the position B of +30 degrees. In other words, as shown in FIG. 5, the substantial center (reference position) in the tire circumferential direction of the RFID tag 40 is arranged so as to be the position B of +30 degrees. The degrees of freedom in arrangement position of the joint part of the tire constituent members other than the inner liner 29 thereby rises. For example, by arranging the RFID tag 40 at such a position, it is possible to appropriately arrange the joint part of the tire constituent members other than the inner liner 29 by effectively using the range of +90 to +270 degrees, i.e. range of at least +90 degrees to no more than +270 degrees. It should be noted that the RFID tag 40 is preferably arranged so that the entirety is placed within a range less than the aforementioned +/-90 degrees.

Generally, the joint part of the inner liner 29, joint part of the sidewall rubber 30 and joint part of the tread rubber 28 greatly influence the uniformity of the tire overall. In addition, the joint part of the bead filler 22 also relatively greatly influences the uniformity. Consequently, in the present embodiment, arranging the RFID tag 40 as within the range less than +/-90 degrees, e.g. at the position B of +30 degrees will evenly arrange the joint part of the sidewall rubber 30, joint part of the tread rubber 28 and joint part of the second bead filler 222 (bead filler 22, in the case of the first bead filler 221 and second bead filler 222 being integrally formed) within the range of +90 to +270 degrees. More specifically, the joint part of the sidewall rubber 30 is arranged at the position D of +90 degrees, the joint part of the tread rubber 28 is arranged at the position J of +270 degrees (-90 degrees) and the joint part of the second bead filler 222 is arranged at the position G of +180 degrees. In other words, the joint part of the inner liner 29, joint part of the sidewall rubber 30, joint part of the second bead filler 222 and joint part of the tread rubber 28 are evenly arranged at 90 degree intervals with the rotational axis O of the tire 1 as the rotation reference. In addition, the joint part 37C of the rubber sheet 37 as the tire constituent member contacting the RFID tag 40 is arranged within range of +90 to +270 degrees, i.e. at the position I of +240 degrees.

In this way, by arranging the RFID tag 40 within a range less than the aforementioned +/-90 degrees with the position of the joint part of the inner liner 29 as a reference, it is possible to raise the degrees of freedom in arrangement of the joint parts of tire constituent members, and secure favorable uniformity.

In a state in which the position of the joint part of each tire constituent member is set as mentioned above, each tire constituent member is assembled and the green tire is formed. Subsequently, the green tire in which each tire constituent member including the RFID tag 40 is assembled is vulcanized in the vulcanization step to manufacture the tire. It is thereby possible to manufacture a tire of favorable uniformity.

It should be noted that the rubber sheet 37 is formed in an annular shape, so as to assume a form covering the folding end 25A of the carcass ply 23 over the entire circumference in the state after green tire assembly. Consequently, it becomes possible to suppress the concentration of stress over the entire circumference. As a result thereof, the stress received by the RFID tag 40 also becomes smaller.

It should be noted that, for the joint part of tire constituent members other than the inner liner 29, it is preferable to be arranged within a range of +90 to +270 degrees; however, the joint part of one part may be arranged within another range while arranging at least two joint parts within this range, by effectively using the range of +90 to +270 degrees as shown in the modified examples described later. In this case, the RFID tag 40 and the joint part closest to the RFID tag 40 are preferably distanced by at least 15 degrees, and more preferably at least 30 degrees, with the rotational axis O of the tire 1 as the rotation reference.

It should be noted that, in the present embodiment, a plurality of tire constituent members respectively having joint parts include the inner liner 29 and at least three different from the inner liner 29, and specifically four tire constituent members. However, the plurality of annular tire constituent members respectively having joint parts can obtain the effects of the present embodiment so long as having the inner liner 29 and at least two tire constituent members different from the inner liner 29.

For example, in the case of the sidewall rubber 30 and tread rubber 28 not having the aforementioned such joint parts, for example, case of being configured by a so-called ribbon winding method or the like, the tire 1 has the inner liner 29, second bead filler 222 and rubber sheet 37 as a plurality of annular tire constituent members respectively having joint parts formed by one end side and the other end side of an elongated member being joined. Then, in this case as well, so long as arranging the RFID tag 40 within a range less than +/- 90 degrees, it is possible to arrange the joint part 222C of the second bead filler 222 as a first tire constituent member and the joint part 37C of the rubber sheet 37 as a second tire constituent member sandwiching the RFID tag 40 with a higher degree of freedom by effectively using the range of +90 to +270 degrees, for example. For example, it is possible to arrange the RFID tag 40 at the position B of +30 degrees, arrange the joint part 222C of the second bead filler 222 at the position G of +180 degrees, and arrange the joint part 37C of the rubber sheet 37 at the position I of +240 degrees. Alternatively, it is also possible to arrange the join part 222C of the second bead filler 222 at the position C of +120 degrees, and evenly distribute the joint part of the inner liner 29, joint part 222C of the second bead filler 222 and joint part 37C of the rubber sheet 37 at 120 degree intervals.

It should be noted that, even in the case of having at least four annular tire constituting members respectively having a joint part other than the inner liner 29, it is possible to suitably obtain the effects of the present embodiment. Even in this case, the RFID tag 40 and joint part closest to the RFID tag 40 are preferably distanced by at least 15 degrees, more preferably at least 30 degrees, with the rotational axis O of the tire 1 as the rotation reference.

It should be noted that the RFID tag 40 is preferably arranged to be distanced by at least 30 degrees, and more preferably at least 60 degrees, with the rotational axis O of the tire 1 as the rotation reference, from the joint part of the first tire constituent member contacted by the RFID tag 40 (including a state integrally covered by the protective member 43). In the present embodiment, the RFID tag 40 is arranged to be distanced 150 degrees, with the rotational axis O of the tire 1 as the rotation reference, from the joint part 222C of the second bead filler 222 as the first tire constituent member contacted by the RFID tag 40. In addition, the RFID tag 40 is arranged to be distanced 150 degrees, with the rotational axis O of the tire 1 as the rotation reference, from the joint part 37C of the rubber sheet 37 as the second tire constituent member contacted by the RFID tag 40.

It should be noted that the RFID tag 40 is preferably arranged to be distanced by at least 30 degrees, and more preferably at least 60 degrees, with the rotational axis O of the tire 1 as the rotation reference, from the joint part of the first tire constituent member and the joint part of the second tire constituent member sandwiching the RFID tag 40 (including a state integrally covered by the protective member 43). In the present embodiment, the RFID tag 40 is arranged to be distanced 150 degrees, with the rotational axis O of the tire 1 as the rotation reference, from the joint part 222C of the second bead filler 222 as the first tire constituent member and the joint part 37C of the rubber sheet 37 as the second tire constituent member sandwiching the RFID tag 40.

It should be noted that the joint part of the first tire constituent member and the joint part of the second tire constituent member sandwiching the RFID tag 40 are preferably arranged to be distanced by at least 30 degrees, and more preferably at least 60 degrees. In the present embodiment, the joint part 222C of the second bead filler 222 as the first tire constituent member and the joint part 37C of the rubber sheet 37 as the second tire constituent member are arranged to be distanced by 60 degrees with the rotational axis O of the tire 1 as the rotation reference.

It should be noted that, even in a case of arranging the RFID tag at another position within a range less than +/-90 degrees, e.g. position of 30 degrees, it is possible to secure favorable uniformity, while arranging the joint parts of tire constituent members other than the inner liner 29 with high degrees of freedom, by effectively using the range of +90 to +270 degrees or the like.

It should be noted that, when considering the securing of uniformity, dimensional tolerance and manufacturing error, the interval of the plurality of joint parts is preferably at least 15 degrees, and more preferably at least 30 degrees, with the rotational axis O of the tire 1 as the rotation reference. For example, the interval of the plurality of joint parts may be set as 30 to 90 degrees.

It should be noted that, in the case of the joint part being a joint part of a specific structure, specifically the overlapped joint part J2 or sloped face abutting joint part J1, it is necessary to give particular attention to the influence on uniformity. For example, in the case of the joint part of the inner liner 29 and the joint part of at least two tire constituent members of other than the inner liner 29 (e.g., sidewall rubber 30, tread rubber 28) being the overlapped joint part J2 or sloped face abutting joint part J1, these joint parts are preferably arranged with at least 30 degree intervals.

A first modified example of the tire 1 of the present embodiment is shown in FIG. 10B. In the first modified example, the RFID ag 40 is arranged at the position C of +60 degrees, as the position within a range less than +/-90 degrees. Also in this case, it is possible to secure favorable uniformity, while arranging the joint part of the tire constituent member with a high degree of freedom.

In the first modified example, the joint part of the inner liner 29, joint part of the sidewall rubber 30 and joint part of the tread rubber 28 which have great influence on the uniformity of the tire overall are evenly distributed at intervals of 120 degrees with the rotational axis O of the tire 1 as the rotation reference. More specifically, when setting the position of the joint part of the inner liner 29 as the position A of 0 degrees, the joint part of the sidewall rubber 30 is arranged at the position E of +120 degrees, and the tread rubber joint part is arranged at the position I of +240 degrees. Consequently, the overall uniformity becomes very favorable.

In addition, the arrangement position of the RFID tag 40, joint part of the second bead filler 222 as the first tire constituent member sandwiching the RFID tag 40 and the joint part of the rubber sheet 37 as the second tire constituent member sandwiching the RFID tag 40 are evenly distributed at intervals of 120 degrees with the rotational axis O of the tire 1 as the rotation reference. More specifically, the RFID tag 40 is arranged at the position C of +60 degrees, the joint part of the second bead filler 222 is arranged at the position G of +180 degrees, and the joint part of the rubber sheet 37 is arranged at the position K of +300 degrees. Then, the RFID tag 40 is distanced by at least 30 degrees, specifically 60 degrees, with the rotational axis O of the tire 1 as the rotation reference, from the joint part closest to the RFID tag 40. It is thereby possible to prevent deterioration in the uniformity by embedding of the RFID tag 40.

It should be noted that, in the first modified example, since the arrangement positions of all joint parts and the RFID tag 40 are evenly distributed at intervals of 60 degrees with the rotational axis O of the tire 1 as the rotation reference, the uniformity becomes favorable overall. In this way, even if arranging the RFID tag 40 at a position within a range less than +/-90 degrees, specifically the position C of +60 degrees, it is possible to raise the degrees of freedom in the arrangement positions of the joint parts of the tire constituent members.

It should be noted that, in the case of arranging the RFID tag 40 at the position K of -60 degrees (+300 degrees) as the position within the range less than +/-90 degrees, the joint part of the rubber sheet 37 may be arranged at the position C of +60 degrees.

In the present modified example, the RFID tag 40 has at least part arranged at a position at which the angle formed by the joint part of the inner liner 29 around the tire rotational axis is within the range of no more than 60 degrees, with the position of the joint part of the inner liner 29 as a reference. It should be noted that, so long as arranging the RFID tag 40 at a position within the range of +/-60 degrees (at least -60 degrees and no more than +60 degrees), even in the case of the number of tire constituent members having a joint part being many, or the like, it is possible to secure favorable uniformity, while arranging the joint parts of tire constituent members other than the inner liner 29 with high degrees of freedom, by effectively using the range of +90 to +270 degrees.

It should be noted that the joint part of the inner liner 29, joint part of the sidewall rubber 30 and joint part of the tread rubber 28 which have great influence on the uniformity of the tire overall are preferably evenly distributed at intervals of 120 degrees as shown in the present modified example; however, so long as arranging to be distanced by at least 90 degrees, it is possible to secure favorable uniformity.

A second modified example of the tire 1 of the present embodiment is shown in FIG. 10C. In the second modified example, the RFID tag 40 is arranged at the position B of +30 degrees, as the position within the range less than +/-90 degrees. Also in this case, it is possible to secure favorable uniformity, while arranging the joint parts of the tire constituent members with a high degree of freedom.

In the second modified example, the joint part of the rubber sheet 37 is arranged at the position H of +210 degrees. It should be noted that the arrangement positions of other joint parts are the same as the first modified example. In this case, since the RFID tag 40 and the joint part of the rubber sheet 37 are arranged to be distanced by 180 degrees with the rotational axis O of the tire 1 as the rotation reference, the uniformity becomes favorable.

A third modified example of the tire 1 of the present embodiment is shown in FIG. 10D. In the third modified example, the RFID tag 40 is arranged at the position M of +45 degrees, as the position within the range less than +/-90 degrees. Also in this case, it is possible to secure favorable uniformity, while arranging the joint parts of the tire constituent members with a high degree of freedom.

In the third modified example, the joint part of the rubber sheet 37 is arranged at the position P of +225 degrees. It should be noted that the arrangement positions of other joint parts are the same as the first modified example. Also in this case, since the RFID tag 40 and the joint part of the rubber sheet 37 are arranged to be distance by 180 degrees with the rotational axis O of the tire 1 as the rotation reference, the uniformity becomes favorable.

A fourth modified example of the tire 1 of the present embodiment is shown in FIG. 10E. In the fourth modified example, the RFID tag 40 is arranged at the position M of +45 degrees, as the position within the range less than +/-90 degrees. Also in this case, it is possible to raise the degrees of freedom in arrangement position of the joint parts of the tire constituent members, while ensuring uniformity of the tire overall.

More specifically, in the fourth modified example, when defining the joint part of the inner liner 29 as the position A of 0 degrees, the joint part of the sidewall rubber 30 is arranged at the position D of +90 degrees, the joint part of the second bead filler 222 is arranged at the position G of +180 degrees, the joint part of the tread rubber 28 is arranged at the position J of +270 degrees, and the joint part of the rubber sheet 37 is arranged at the position P of +225 degrees. Then, the RFID tag 40 is distanced by at least 30 degrees, specifically 45 degrees, with the rotational axis O of the tire 1 as the rotation reference, from the joint part closest to the RFID tag 40. In this way, even if arranging the RFID tag 40 at a position within the range less than +/-90 degrees, specifically the position M of +45 degrees, it is possible to raise the degrees of freedom in arrangement positions of the joint parts of the tire constituent members.

In the present modified example, the RFID tag 40 has at least part arranged at a position at which the angle formed by the joint part of the inner liner 29 around the tire rotational axis is within the range of no more than 45 degrees, with the position of the joint part of the inner liner 29 as a reference. It should be noted that, so long as arranging the RFID tag 40 at a position within the range of +/-45 degrees (at least -45 degrees and no more than +45 degrees), even in the case of the number of tire constituent members having a joint part being many, or the like, it is possible to secure favorable uniformity, while arranging the joint parts of tire constituent members other than the inner liner 29 with high degrees of freedom, by effectively using the range of +90 to +270 degrees.

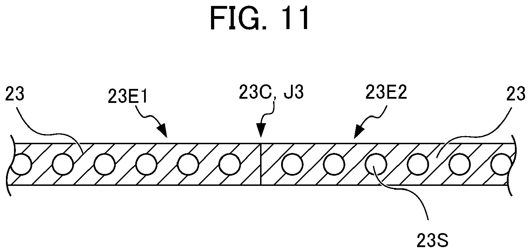

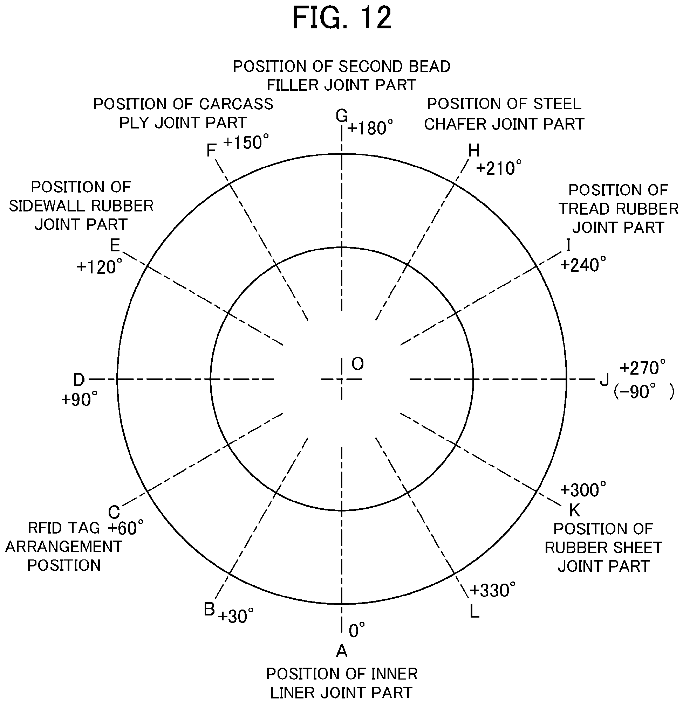

A fifth modified example of the tire 1 of the present embodiment is shown in FIGS. 11 and 12. In the fifth modified example, the joint part of a fiber member such as the carcass ply 23 is also considered. The carcass ply 23 of the fifth modified example is an annular tire constituent member configured from a metal fiber member in which metal fibers are coated with rubber, and has a joint part 23C. FIG. 11 is a view showing a cross section of the joint part 23C of the carcass ply 23. As shown in FIG. 11, the joint part 23C of the carcass ply 23 is configured by an end face abutting joint part J3 in which the one end side 23E1 and another end side 23E2 of a metal fiber member coated by rubber are abutted and joined. Herein, 23S in FIG. 11 indicates the metal fiber.

The carcass ply 23 is formed in an annular shape, by the one end side 23E1 and the other end side 23E2 of the metal fiber member coated by rubber being joined by such an end face abutting joint part J3. In addition, the steel chafer 31 similarly is also an annular tire constituent member configured from a metal fiber member in which metal fibers are coated with rubber, and one end side and another end side are connected by the end face abutting joint part J3.

FIG. 12 is a view simplifying to show a relationship of the positions of the joint parts of the plurality of tire constituent members and the arrangement position of the RFID tag 40 in the tire of the first embodiment of the present modified example. In the present modified example, the joint part 23C of the carcass ply 23 is arranged at the position F of +150 degrees, and the joint part of the steel chafer 31 is arranged at the position H of +210 degrees. The arrangement positions of other joint parts and the arrangement position of the RFID tag 40 are the same as the first modified example shown in FIG. 10B.

Herein, at the metal fiber member such as the carcass ply 23, electric field concentration tends to occur at the joint part J3 at which the metal fibers inside are cut, and this portion tends to become an electrical singular point. Consequently, when the RFID tag 40 is arranged adjacent to the joint part J3 of such a metal fiber member, there is a possibility of the electrical characteristics such as communication performance of the RFID tag 40 declining. However, by arranging the RFID tag 40 within the range less than +/-90 degrees as shown in the present modified example, it is possible to arrange the joint part of metal fiber members such as the carcass ply 23 with a high degree of freedom by effectively using the range of +90 to +270 degrees, or the like.

By such a configuration, it becomes possible to raise the degrees of freedom in arrangement positions of the joint parts of the tire constituent members, and it is possible to secure uniformity of the tire overall, communication performance of the RFID tag 40, etc.

It should be noted that, upon securing the communication performance, etc., the arrangement position of the RFID tag 40 and the position of the joint part of the metal fiber member are set so as to be distanced by at least 30 degrees, with the rotational axis 0 of the tire 1 as the rotation reference. Preferably, they are set so as to be distanced by at least 60 degrees, more preferably at least 90 degrees. In the present embodiment, the RFID tag 40 is arranged to be distanced by 90 degrees, with the rotational axis O of the tire 1 as the rotation reference, from the joint part of the metal fiber member closest to the RFID tag 40.

It should be noted that, in the case of the RFID tag 40 being arranged in the vicinity of the bead filler 22, the arrangement position of the RFID tag 40 and the position of the joint part of the metal fiber member (for example, carcass ply 23, steel chafer 31) arranged in the vicinity of the bead filler 22 are set so as to be distanced by at least 30 degrees, with the rotational axis O of the tire 1 as the rotation reference. On the other hand, as described later in the second embodiment, in the case of the RFID tag 40 being arranged in the vicinity of the tread rubber 28, the arrangement position of the RFID tag 40 and the position of the joint part of the metal fiber member (for example, carcass ply 23, steel belt 26) arranged in the vicinity of the tread rubber 28 are set so as to be distanced by at least 30 degrees, with the rotational axis O of the tire 1 as the rotation reference.

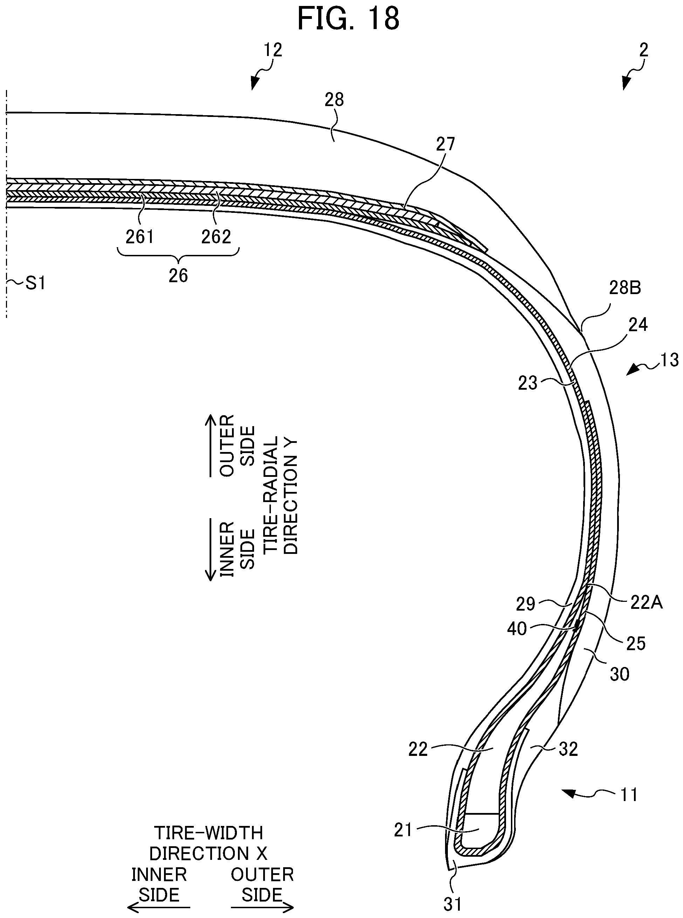

Herein, vicinity of the bead filler 22, in the case of having the pad member 34 in the vicinity of the bead filler 22 (refer to FIG. 1), indicates including a region more to the inner side in the tire-radial direction than the tire-radial direction outside end 36A of the pad member 34 (second pad 36), and in the case of not having the pad member 34 in the vicinity of the bead filler 22 (refer to FIG. 18), indicates a region more to the inner side in the tire-radial direction than the tire-radial direction outside end 22A of the bead filler 22. In addition, vicinity of the tread rubber 28, in the case of having the shoulder pad 38 in the vicinity of the tread rubber 28 (refer to FIG. 1), indicates including a region more to the outer side in the tire-radial direction than the tire-radial direction inside end 38B of the shoulder pad 38, and in the case of not having the shoulder pad 38 in the vicinity of the tread rubber 28 (refer to FIG. 18) indicates a region more to the outer side in the tire-radial direction than the tire-radial direction inside end 28B of the tread rubber 28.

It should be noted that, since the carcass ply 23 is a tire constituent member existing in the entire tire, the RFID tag 40 is preferably set so as to be distanced by at least 30 degrees, with the rotational axis O of the tire 1 as the rotation reference, from at least the joint part of the carcass ply 23.

It should be noted that, even in a case of arranging the RFID tag at a position within a range less than +/-90 degrees close to +90 degrees, e.g. position of +80 degrees, it is possible to arrange the joint parts of tire constituent members other than the inner liner 29 with high degrees of freedom, by effectively using the range of +90 to +270 degrees or the like. Similarly, even in the case of arranging the RFID tag at the position of -80 degrees, for example, it is possible to arrange the joint parts of tire constituent members other than the inner liner 29 with high degrees of freedom, by effectively using the range of +90 to +270 degrees or the like. In other words, the RFID tag 40 may have at least part thereof arranged at a position at which the angle formed with the joint part of the inner liner 29 around the tire rotational axis, with the position of the joint part of the inner liner 29 as reference, becomes within the range of no more than 80 degrees. In this way, even in the case of arranging the RFID tag 40 at a position within the range of +/-80 degrees (at least -80 degrees and no more than +80 degrees), it is possible to arrange the joint parts of the tire constituent members with a high degree of freedom.

It should be noted that, upon arranging the joint parts of tire constituent members other than the inner liner 29 with a high degree of freedom by effectively using the range of +90 to +270 degrees or the like, it is sufficient so long as arranging the RFID tag 40 within a range less than +/-90 degrees, i.e. within a range in which the angle formed with the inner liner 29 is less than 90 degrees (not including +90, -90 degrees); however, in order to further raise the degrees of freedom, it may be arranged within a range of +/-60 degrees (including +60, -60 degrees), or within a range of +/-45 degrees (including +45, -45 degrees). In other words, the RFID tag 40 may be arranged within a range in which the angle formed with the joint part of the inner line is no more than 60 degrees (including +60, -60 degrees) in order to further raise the degrees of freedom, or may be arranged within a range in which the angle formed with the joint part of the inner liner is no more than 45 degrees (including +45, -45 degrees). So long as arranging the RFID tag 40 within such a range, also in the case of the number of tire constituent members having a joint part being many, or the like, it is possible to further raise the degrees of freedom in arrangement position of the joint parts of the tire constituent members.

It should be noted that, in the case of preventing overlap of the arrangement position of the joint part of the inner liner 29 and the arrangement position of the RFID tag 40, the RFID tag 40 may be arranged at a position distanced by at least 15 degrees from the joint part of the inner liner 29. In other words, the RFID tag 40 may have at least part thereof arranged at a position at which the angle formed with the inner liner 29 around the tire rotational axis is distanced by at least 15 degrees, with the position of the joint part of the inner liner 29 as reference. Alternatively, the RFID tag 40 may be arranged at a position distanced by at least 30 degrees from the joint part of the inner liner 29. For example, the RFID tag 40 may be arranged within a range of -60 to -15 degrees, or within a range of +15 to +60 degrees. This embodiment is particularly effective in the case of arranging the RFID tag 40 on the inner cavity side of the ply body 24 of the carcass ply 23, case of arranging in the vicinity of the ply body 24 of the carcass ply 23, or the like.

It should be noted that, if configuring the protective member 43 by the two coating rubber sheets 431, 432, since it is possible to thinly form the RFID tag 40 including the protective member 43, it is suitable upon embedding the tire 1. In addition, when assembling the RFID tag 40 to the constituent members of the tire 1 prior to vulcanization, the RFID tag 40 covered by the coating rubber sheets can be installed very easily. For example, at a desired position of a member such as the second bead filler 222 prior to vulcanization, it is possible to appropriately paste the RFID tag 40 covered by the coating rubber sheets 431, 432 using the adhesiveness of the raw rubber. In addition, by also establishing the coating rubber sheets 431, 432 as raw rubber prior to vulcanization, it is possible to more easily paste by employing the adhesiveness of the coating rubber sheet itself as well.

However, the protective member 43 is not limited to the form configured by two coating rubber sheets, and can adopt various forms. For example, so long as the coating rubber sheets constituting the protective member is covering at least part of the RFID tag 40, effects can be obtained such as an improvement in workability in the manufacturing process and stress mitigation. Consequently, a configuration may be adopted which covers only one side of the RFID tag 40 by the one coating rubber sheet 431 serving as the protective member. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if a configuration using such coating rubber, it will be possible to appropriately protect the RFID tag 40.

It should be noted that the RFID tag 40 covered by the protective member 43 is preferably embedded in the tire 1 so that the direction in which the antenna extends and the circumferential direction of the tire 1 become substantially matching directions. A space for arranging the RFID tag 40 covered by the coating rubber constituting the protective member 43 thereby tends to be secured in the annular tire constituent members. In addition, the quality of the arrangement position and the arrangement direction of the RFID tag 40 as an electronic component having an antenna tends to be secured. In addition, by establishing such an embodiment, stress hardly acts on the RFID tag 40, even when the tire 1 deforms.

In the present embodiment, as shown in FIG. 6B, the protective member 43 covering the RFID tag 40 is pasted to the second bead filler 222, which is still a straight rubber member. At this time, the protective member 43 is pasted so that the longitudinal direction of the straight elongated rubber member constituting the second bead filler 222 and the longitudinal direction of the protective member 43 match. More specifically, subsequently, the protective member 43 is pasted so that the portion forming the outer circumference 22A (tire-radial direction outside end 22A) of the second bead filler 222 and the portion forming the tire-radial direction outer side 43A of the protective member 43 are parallel.

A straight elongated rubber member constituting the second bead filler 222 is subsequently wound to be formed in an annular shape as shown in FIG. 6C. At this time, the protective member 43 pasted to the second bead filler 222 becomes a circular arc shape of a bow made by curving a substantially rectangular shape, as shown in FIG. 6C. Herein, by using a flexible coil spring antenna or the like as the antenna of the RFID tag 40, the antenna also deformed following deformation of the protective member 43. It is thereby possible to arrange the RFID tag 40 covered by the protective member 43 simply and accurately in the aforementioned direction, without giving special markers.

In this way, the manufacturing method of the tire 1 of the present embodiment includes: a first step of pasting the coating rubber covering the RFID tag 40 as the electronic component to a straight elongated rubber member so that the longitudinal direction of the elongated rubber member and coating rubber match; and a second step of winding the straight elongated rubber member to which the RFID tag 40 was pasted, forming the bead filler 22 (second bead filler 222) as an annular tire constituent member, as well as curving the coating rubber covering the RFID tag 40 to make the coating rubber into a circular arc shape. A space for arranging the RFID tag 40 covered by the coating rubber thereby tends to be secured in the annular tire constituent members. In addition, due to pasting the coating rubber to the rubber member which is still straight, the workability is good, and the securing of quality in the arrangement position and arrangement direction of the RFID tag 40 also becomes easy. In addition, the quality in arrangement position and arrangement direction of the RFID tag 40 tends to be secured. It should be noted that it is also possible to paste the RFID tag 40 (including state integrally covered by the protective member 43) to a tire constituent member after being formed into an annular shape.

It should be noted that the RFID tag 40 is preferably sandwiched between tire constituent members in a state covered by the protective member 43 integrally formed with the aforementioned such RFID tag 40; however, it may be sandwiched directly between tire constituent members without covering by the protective member 43. If sandwiching the uncoated RFID tag 40 directly between tire constituent members, fluctuation in the thickness of rubber members at the portion where the RFID tag 40 is sandwiched decreases, and thus uniformity of the tire improves. In addition, in the work of sandwiching the RFID tag 40 between tire constituent members, the removal of air also becomes easier by the volume of the sandwiched object being smaller. In addition, by a process of covering the RFID tag 40 by the protective member being eliminated, the work time shortens.

It should be noted that, in the present embodiment, although the RFID tag 40 is embedded in the tire as an electronic component, the electronic component embedded in the tire is not limited to an RFID tag. For example, it may be various electronic components such as a sensor which carries out wireless communication. In the case of embedding the electronic component in the tire, it is necessary to consider the influence on uniformity. In addition, since the electronic component handles electrical information such as sending and receiving of electrical signals, there is a possibility of the performance declining due to metal components being present in the vicinity thereof. In addition, there is a possibility of the electronic component being damaged by excessive stress being applied. Consequently, even in the case of embedding various electronic components in a tire, it is possible to obtain the effects of the present invention. For example, the electronic component may be a piezoelectric element or strain sensor.

According to the tire 1 of the present embodiment, the following effects are exerted.
(1) The tire 1 according to the present embodiment includes: a plurality of annular tire constituent members respectively having a joint part formed by one end side and another end side of the member being joined; and the RFID tag 40 as an electronic component, in which the plurality of annular tire constituent members respectively having a joint part include the inner liner 29 covering the tire inner cavity surface, and at least two tire constituent members different from the inner liner 29, the RFID tag 40 is arranged within a predetermined range with the position of the joint part of the inner liner 29 as a reference, and the predetermined range is a range less than +/-90 degrees, when defining the rotational position of the joint part of the inner liner 29 as 0 degrees, in the case of setting the rotational axis O of the tire 1 as the rotation reference. In other words, the RFID tag 40 is disposed within a range less than 90 degrees around the tire rotational axis, with the position of the joint part of the inner liner 29 as a reference. It is thereby possible to provide a tire made by considering the positional relationship between the joint parts of a plurality of tire constituent members and the electronic component. For example, in the technology shown in Patent Document 1, it is not particularly considered at which position in the circumferential direction of the tire to embed the electronic component. However, when arranging the electronic component without particularly deciding the embedding position in the circumferential direction, since portions which are a cause for fluctuation in thickness of rubber structures such as the embedding position of the electronic component, and the joint parts overlapping by winding rubber members constituting the tire irregularly arise at a plurality of locations, there is concern over the uniformity deteriorating. As in the tire 1 of the present embodiment, by arranging the RFID tag 40 within the aforementioned range of +/-90 degrees, the degrees of freedom in arrangement of the joint parts of the annular tire constituent members other than the inner liner 29 increase. Consequently, it is possible to arrange the joint parts to be dispersed, and thus possible to secure favorable uniformity of the tire 1. In other words, according to the present embodiment, even in the case of embedding an electronic component such as an RFID tag inside of a tire, it is possible to provide a tire having favorable uniformity.
(2) The RFID tag 40 of the tire 1 according to the present embodiment is arranged within a range of +/-60 degrees (at least -60 degrees and no more than +60 degrees), when defining the rotational position of the joint part of the inner liner 29 as 0 degrees. In other words, the RFID tag 40 is arranged within a range of no more than 60 degrees around the tire rotational axis, with the position of the joint part of the inner liner 29 as a reference. It is thereby possible to further raise the degrees of freedom in arrangement positions of joint parts of the plurality of annular tire constituent members. In addition, even in a case of the number of annular tire constituent members having a joint part being many, it is possible to raise the degrees of freedom in arrangement positions of the joint parts.
(3) The RFID tag 40 of the tire 1 according to the present embodiment is arranged within a range of +/-45 degrees (at least -45 degrees and no more than +45 degrees), when defining the rotational position of the joint part of the inner liner 29 as 0 degrees. In other words, the RFID tag 40 is arranged within a range of no more than 45 degrees around the tire rotational axis, with the position of the joint part of the inner liner 29 as a reference. It is thereby possible to further raise the degrees of freedom in arrangement positions of joint parts of the plurality of annular tire constituent members. In addition, even in a case of the number of annular tire constituent members having a joint part being many, it is possible to raise the degrees of freedom in arrangement positions of the joint parts.
(4) The tire 1 according to the present embodiment includes the bead filler 22 (second bead filler 222) as the plurality of annular tire constituent members respectively having joint parts, in which the RFID tag 40 is arranged in the vicinity of the bead filler 22, and the RFID tag 40 is arranged at a position distanced by at least 30 degrees from the position of the joint part of the bead filler 22, with the rotational axis O of the tire 1 as the rotation reference. In this way, in the case of arranging the RFID tag 40 in the vicinity of the bead filler 22, it is possible to secure favorable uniformity, by arranging the RFID tag 40 to be distanced from the joint part of the bead filler 22.
(5) The tire 1 according to the present embodiment includes the first tire constituent member contacted by the RFID tag 40 as the plurality of annular tire constituent members respectively having joint parts, in which the RFID tag 40 is arranged at a position distanced by at least 30 degrees from the position of the joint part of the first tire constituent member, with the rotational axis O of the tire 1 as the rotation reference. For example, the tire 1 includes the first tire constituent member contacted by the RFID tag 40 as the plurality of annular tire constituent members respectively having joint parts, in which the RFID tag 40 is arranged at a position distanced by at least 120 degrees from the position of the joint part of the first tire constituent member, with the rotational axis O of the tire 1 as the rotation reference. In this way, by arranging the RFID tag 40 to be distanced from the joint part of the first tire constituent member contacted by the RFID tag 40, it is possible to secure favorable uniformity.
(6) The tire 1 according to the present embodiment includes the bead filler 22 (second bead filler 222) as the first tire constituent member and the rubber sheet 37 as the second tire constituent member sandwiching the RFID tag 40, as the plurality of annular tire constituent members respectively having joint parts, in which the RFID tag 40 is arranged at a position distanced by at least 30 degrees from the position of the joint part of the first tire constituent member, with the rotational axis of the tire 1 as the rotation reference, which is a position distanced by at least 30 degrees from the position of the joint part of the second tire constituent member, with the rotational axis of the tire 1 as the rotation reference. For example, the tire 1 includes the bead filler 22 (second bead filler 222) as the first tire constituent member and the rubber sheet 37 as the second tire constituent member sandwiching the RFID tag 40, as the plurality of annular tire constituent members respectively having joint parts, in which the RFID tag 40 is arranged at a position distanced by at least 120 degrees from the position of the joint part of the first tire constituent member, with the rotational axis of the tire 1 as the rotation reference, which is a position distanced by at least 120 degrees from the position of the joint part of the second tire constituent member, with the rotational axis of the tire 1 as the rotation reference. In this way, by distancing the RFID tag 40 from the positions of the joint parts of the first tire constituent member and second tire constituent member sandwiching the RFID tag 40, it is possible to secure favorable uniformity.
(7) The joint part of the first tire constituent member and the joint part of the second tire constituent member of the tire 1 according to the present embodiment are arranged to be distanced by at least 30 degrees, with the rotational axis of the tire 1 as the rotation reference. In this way, by the positions of the joint parts of the first tire constituent member and second tire constituent member sandwiching the RFID tag 40 also being distanced, it is possible to secure more favorable uniformity.
(8) The joint parts of at least two tire constituent members different from the inner liner 29 of the tire 1 according to the present embodiment are configured from joint parts of specific structure, in which the joint parts of specific structure are an overlapped joint part made by overlapping to join one end side and another end side of a member, or a sloped face abutting joint part made by abutting to join a sloped face of one end side and a sloped face of another end side of a member, the plurality of joint parts of specific structure are arranged at intervals of at least 30 degrees with the rotational axis O of the tire 1 as the rotation reference, and the RFID tag 40 is arranged to be distanced by at least 30 degrees from the closest joint part of specific structure among the plurality of joint parts of specific structure, with the rotational axis O of the tire 1 as the rotation reference. In this way, by arranging at intervals the overlapped joint part or sloped face abutting joint part, which are joint parts which tend to influence uniformity, and further devising the arrangement position of the RFID tag 40, it is possible to secure favorable uniformity.
(9) The tire 1 according to the present embodiment includes the inner liner 29, sidewall rubber 30 and tread rubber 28 as the plurality of annular tire constituent members respectively having joint parts, in which the joint part of the inner liner 29, joint part of the sidewall rubber 30 and joint part of the tread rubber 28 are arranged at intervals of at least 90 degrees, with the rotational axis O of the tire 1 as the rotation reference, and the RFID tag 40 is arranged to be distanced by at least 30 degrees from the closest joint part among the joint part of the sidewall rubber 30 and joint part of the tread rubber 28, with the rotational axis O of the tire 1 as the rotation reference. By distancing the positions of the joint parts of the inner liner 29, sidewall rubber 30 and tread rubber 28 which are joint parts tending to influence the uniformity of the tire overall, and further devising the arrangement position of the RFID tag 40, it is possible to secure favorable uniformity.
(10) The tire 1 according to the present embodiment includes the metal fiber member in which metal fibers are coated with rubber, as the plurality of annular tire constituent members respectively having joint parts, in which the RFID tag 40 is arranged at a position distanced by at least 30 degrees from the position of the joint part of the metal fiber member, with the rotational axis O of the tire 1 as the rotation reference. In this way, by distancing the RFID tag 40 and the position of the joint part of the metal fiber member at which electric field concentration tends to occur, it is possible to decrease the possibility of the RFID tag 40 inducing electrical problems such as communication performance abnormalities.
(11) The tire 1 according to the present embodiment includes the carcass ply 23 as the metal fiber member in which metal fibers are coated with rubber, as the plurality of annular tire constituent members respectively having joint parts, in which the RFID tag 40 is arranged at a position distanced by at least 30 degrees from the position of the joint part of the carcass ply 23, with the rotational axis O of the tire 1 as the rotation reference. In this way, by distancing the RFID tag 40 and the position of the abutting joint part of the carcass ply 23 as the metal fiber member at which electric field concentration tends to occur, it is possible to decrease the possibility of the RFID tag 40 inducing electrical problems such as communication performance abnormalities.
(12) The RFID tag 40 of the tire 1 according to the present embodiment is arranged within a range of -60 to -15 degrees, or within a range of +15 to +60 degrees (within a range of at least -60 degrees to no more than -15 degrees, or within a range of at least +15 degrees to no more than +60 degrees), when defining the rotation position of the joint part of the inner liner 29 as 0 degrees. In this way, by preventing overlap of the arrangement position of the joint part of the inner liner 29 and the arrangement position of the RFID tag 40, the uniformity becomes more favorable.
(13) The tire according to the present embodiment includes: the bead filler as an annular tire constituent member having a joint part formed by one end side and another end side of the member being joined, and the RFID tag 40 as the electronic component arranged in the vicinity of the bead filler, in which the electronic component is arranged at a position distanced by at least 30 degrees from the position of the joint part of the bead filler, with the rotational axis O of the tire 1 as the rotation reference. For example, the tire 1 includes: the bead filler as an annular tire constituent member having a joint part formed by one end side and another end side of the member being joined, and the RFID tag 40 as the electronic component arranged in the vicinity of the bead filler, in which the electronic component is arranged at a position distanced by at least 120 degrees from the position of the joint part of the bead filler, with the rotational axis O of the tire 1 as the rotation reference. In this way, in the case of arranging the RFID tag 40 in the vicinity of the bead filler 22, by arranging the RFID tag 40 to be distanced from the joint part of the bead filler 22, it is possible to secure favorable uniformity.
(14) The tire 1 according to the present embodiment includes the RFID tag 40 as an electronic component, and the annular first tire constituent member and the annular second tire constituent member sandwiching the electronic component, in which the first tire constituent member and second tire constituent member respectively have joint parts formed by one end side and another end side of the member being joined, and the electronic component is arranged at a position distanced by at least 30 degrees from the position of the joint part of the first tire constituent member, with the rotational axis O of the tire 1 as the rotation reference, and arranged at a position distanced by at least 30 degrees from the position of the joint part of the second tire constituent member, with the rotational axis O of the tire 1 as the rotation reference. For example, the tire 1 includes the RFID tag 40 as an electronic component, and the annular first tire constituent member and the annular second tire constituent member sandwiching the electronic component, in which the first tire constituent member and second tire constituent member respectively have joint parts formed by one end side and another end side of the member being joined, and the electronic component is arranged at a position distanced by at least 120 degrees from the position of the joint part of the first tire constituent member, with the rotational axis O of the tire 1 as the rotation reference, and arranged at a position distanced by at least 120 degrees from the position of the joint part of the second tire constituent member, with the rotational axis O of the tire 1 as the rotation reference. In this way, by distancing the RFID tag 40 from the positions of the joint parts of the first tire constituent member and second tire constituent member sandwiching the RFID tag 40, it is possible to secure favorable uniformity.
(15) The tire 1 according to the present embodiment includes a plurality of annular tire constituent members respectively having joint parts of specific structure formed by one end side and another end side of the member being joined, and the RFID tag 40 as an electronic component, in which the joint part of specific structure is an overlapped joint part made by overlapping to join one end side and another end side of the member, or a sloped face abutting joint part made by abutting to join a sloped face of one end side and a sloped face of another end side of a member, the plurality of joint parts of specific structure are arranged at intervals of at least 30 degrees with the rotational axis O of the tire 1 as the rotation reference, and the electronic component is arranged to be distanced by at least 30 degrees from the closest of the joint parts of specific structure among the plurality of joint parts of specific structure, with the rotational axis O of the tire 1 as the rotation reference. In this way, by arranging the overlapped joint part or sloped face abutting joint part, which are joint parts which tend to influence uniformity, at intervals, and further devising the arrangement position of the RFID tag 40, it is possible to secure favorable uniformity.
(16) The tire 1 according to the present embodiment includes the annular metal fiber member in which metal fibers are coated with rubber, having a joint part formed by one end side and another end side of the member being joined, and the RFID tag 40 as an electronic component, in which the electronic component is arranged at a position distanced by at least 30 degrees from the position of the joint part of the metal fiber member, with the rotational axis O of the tire 1 as the rotation reference. In this way, by distancing the RFID tag 40 and the position of the joint part of the metal fiber member at which electric field concentration tends to occur, it is possible to decrease the possibility of the RFID tag 40 inducing electrical problems such as communication performance abnormalities. It should be noted that the configurations of the above-mentioned (13) to (16) can obtain the effects of securing favorable uniformity and a decrease in possibility of communication performance abnormalities even by each independent configuration.
(17) The manufacturing method of the tire 1 of the present embodiment has a step of arranging the RFID tag 40 as the electronic component so as to be positioned within a predetermined range in the tire constituent members, with the position of the joint part of the inner liner 29 as a reference, in which the predetermined range is a range less than +/-90 degrees, when defining the rotational position of the joint part of the inner liner 29, in the case of setting the rotational axis O of the tire 1 as the rotation reference, as 0 degrees. In this way, by arranging the RFID tag 40 within the aforementioned range of +/-90 degrees, the degrees of freedom in arrangement of the joint parts of annular tire constituent members other than the inner liner 29 increase. Consequently, it is possible to arrange the joint parts to be dispersed, and it is possible to secure favorable uniformity of the tire 1.
(18) The manufacturing method of the tire 1 according to the present embodiment includes: a first step of pasting the coating rubber which is covering the RFID tag 40 as the electronic component to a straight elongated rubber member so that the longitudinal directions of the elongated rubber member and the coating rubber match; and a second step of winding the straight elongated rubber member to which the coating rubber was pasted to form an annular tire constituent member, and curving the coating rubber covering the electronic component to make the coating rubber into a circular arc shape. A space for arranging the RFID tag 40 coated by the coating rubber thereby tends to be secured in the annular tire constituent members such as the bead filler 22. In addition, due to pasting the coating rubber to the rubber member which is still straight, the workability is good, and the securing of quality in the arrangement position and arrangement direction of the RFID tag 40 also becomes easy. In addition, the quality in arrangement position and arrangement direction of the RFID tag 40 tends to be secured.

### <Second Embodiment>

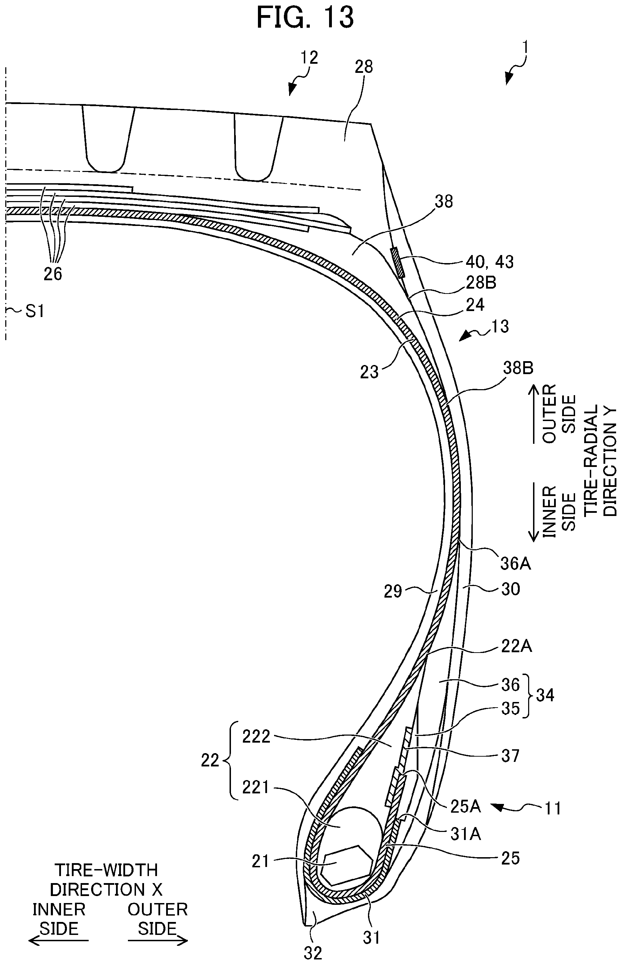

Next, a tire according to a second embodiment will be explained while referencing FIGS. 13 to 15. It should be noted that the same reference symbols will be attached for the same configurations as the first embodiment in the following explanation, and detailed explanations thereof will be omitted.

In the present embodiment, the RFID tag 40 is arranged in the vicinity of the tread rubber 28, as shown in FIG. 13. More specifically, the RFID tag 40 is arranged between the tread rubber 28 and sidewall rubber 30. Then, at least the inner liner 29, tread rubber 28 and sidewall rubber 30 among the tire constituent members of the present embodiment are annular tire constituent members having a joint part formed by one end side and another end side of an elongated member being joined.

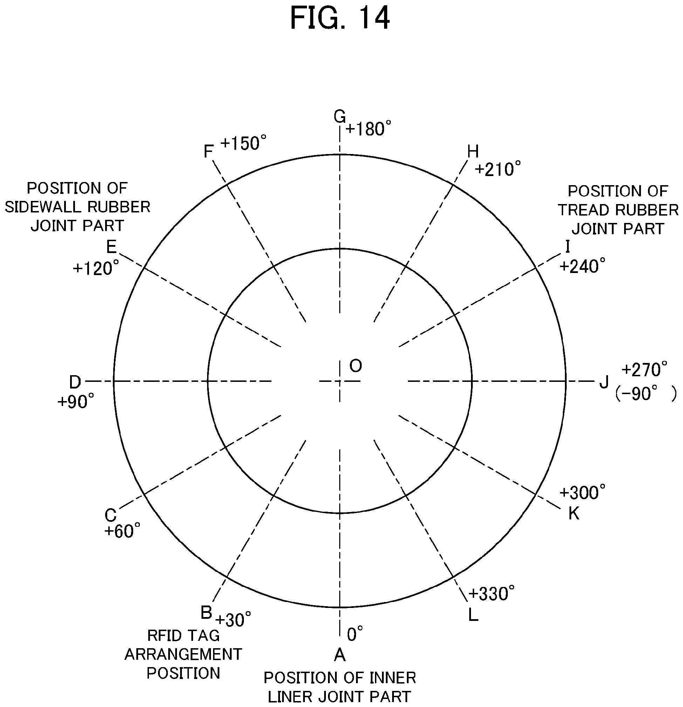

FIG. 14 is a view simplifying to show a relationship between the position of the joint part of the plurality of tire constituent members of the present embodiment and the arrangement position of the RFID tag 40. In the present embodiment, the RFID tag 40 is arranged at the position B of +30 degrees, as the position within the range less than +/-90 degrees. Also in this case, it is possible to secure suitable uniformity, while arranging the joint part of the tire constituent member with a high degree of freedom.

In the present embodiment, the joint part of the inner liner 29, joint part of the sidewall rubber 30 and joint part of the tread rubber 28 which have great influence on the uniformity of the tire overall are evenly distributed at intervals of 120 degrees. More specifically, when setting the position of the joint part of the inner liner 29 as the position A of 0 degrees, the joint part of the sidewall rubber 30 is arranged at the position E of +120 degrees, and the joint part of the tread rubber 28 is arranged at the position I of +240 degrees. Consequently, the overall uniformity becomes very favorable.

According to the above configuration, the RFID tag 40 is arranged to be distanced by at least 30 degrees, at least 90 degrees in the present embodiment, from the joint part of the tread rubber 28 as the first tire constituent member sandwiching the RFID tag 40 and the joint part of the sidewall rubber 30 as the second tire constituent member sandwiching the RFID tag 40. It is thereby possible to prevent deterioration in uniformity due to embedding the RFID tag 40.

In the above way, even in the case of arranging the RFID tag 40 in the vicinity of the tread rubber 28, by arranging the RFID tag 40 at a position within a range less than +/-90 degrees, specifically the position B of +30 degrees, it is possible to raise the degrees of freedom in arrangement positions of the joint parts of tire constituent members, while securing favorable uniformity.

It should be noted that the steel belt 26 arranged in the vicinity of the tread rubber 28 is a tire constituent member in which metal fibers are coated with rubber, and has an abutting joint part in which one end side and another end side of an elongated member are joined in a state abutting. Consequently, in the case of arranging the RFID tag 40 in the vicinity of the tread rubber 28, the RFID tag 40 is preferably arranged so as to be distanced by at least 30 degrees, more preferably at least 60 degrees, from the position of the joint part of the steel belt 26. In addition, in the case of the steel belt 26 being configured from four layers of steel belts 26, when considering uniformity, it is preferable for the joint part of each layer of steel belt 26 to be arranged so as to be distanced at least 30 degrees, and more preferably 60 degrees from each other. Consequently, as shown in FIG. 14, in the case of the RFID tag 40 being arranged at the position B of +30 degrees, the joint parts of the four steel belts 26, for example, can be arranged at the position B (position of +90 degrees), position F (position of +150 degrees), position H (position of +210 degrees) and position J (position of +270 degrees). In this way, in the case of the RFID tag 40 being arranged in the vicinity of the tread rubber 28, by arranging the joint part of each steel belt 26 so as to be distanced by at least 30 degrees, more preferably at least 60 degrees, and further arranging the RFID tag 40 so as to be distanced by at least 30 degrees, more preferably at least 60 degrees, from the joint part of each steel belt 26, it is possible to secure uniformity of the tire 1, communication performance of the RFID tag 40, etc.

It should be noted that, upon further elongating by primarily connecting two elongated rubber members, the tread rubber 28 may be joined at the joint parts to form an annular shape. In this case, it is preferable to establish the position of 180 degrees, the position C of +60 degrees in the present embodiment, with the rotational axis O of the tire 1 as the rotation reference, from the position of the joint part of the tread rubber 28, as the position of the primary joint part at which carrying out the primary connection. It should be noted that the primary joint part may also be configured by a sloped face abutting joint part J1. It should be noted that, normally, the influence on uniformity tends to occur more for the final joint part for forming the tire constituent member into an annular shape, than the primary joint part.

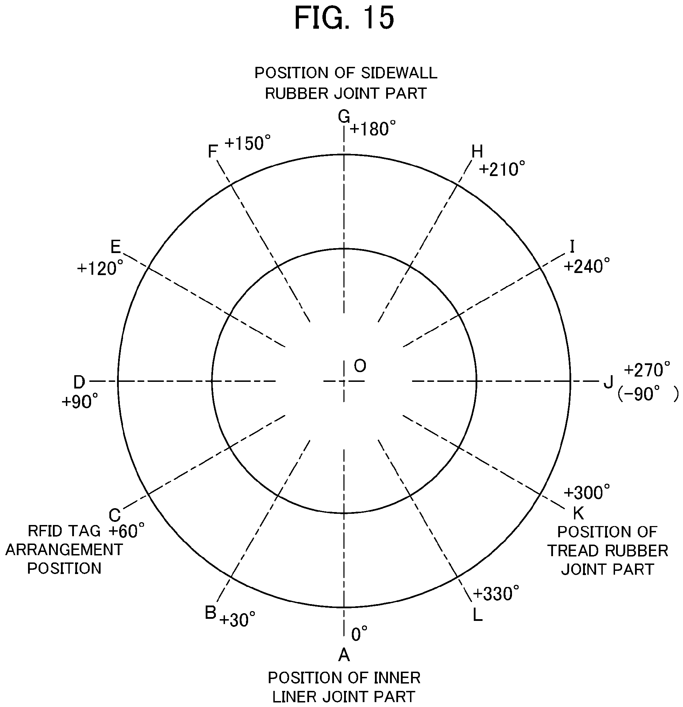

A modified example of the tire 1 of the present embodiment is shown in FIG. 15. In the present modified example, the RFID tag 40 is arranged at the position C of +60 degrees, as the position within a range less than +/-90 degrees. Also in this case, it is possible to secure favorable uniformity, while arranging the joint parts of tire constituent members other than the inner liner 29.

More specifically, in the present modified example, the joint part of the sidewall rubber 30 is arranged at the position G of +180 degrees, and the joint part of the tread rubber 28 is arranged at the position K of +300 degrees, when defining the position of the joint part of the inner liner 29 as the position A of 0 degrees. In this way, even when arranging the RFID tag 40 at a position within a range less than +/-90 degrees, i.e. the position C of +60 degrees, it is possible to raise the degrees of freedom in the arrangement positions of the joint parts of the tire constituent members.

According to the tire related to the present embodiment, the following effects are exerted in addition to the above-mentioned (1) to (18).

(19) The tire 1 of the present embodiment includes the tread rubber 28 as a plurality of annular tire constituent members respectively having joint parts, in which the RFID tag 40 is arranged in the vicinity of the tread rubber 28, and the RFID tag 40 is arranged at a position distanced by at least 30 degrees from the position of the joint part of the tread rubber 28, with the rotational axis O of the tire 1 as the rotation reference. For example, the tire 1 includes the tread rubber 28 as the plurality of annular tire constituent members respectively having joint parts, in which the RFID tag 40 is arranged in the vicinity of the tread rubber 28, and the RFID tag 40 is arranged at a position distanced by at least 120 degrees from the position of the joint part of the tread rubber 28, with the rotational axis O of the tire 1 as the rotation reference. In this way, in the case of arranging the RFID tag 40 in the vicinity of the tread rubber 28, by arranging the RFID tag 40 to be distanced from the joint part of the tread rubber 28, it is possible to secure favorable uniformity.

(20) The tire 1 according to the present embodiment includes the tread rubber 28 as the first tire constituent member and the sidewall rubber 30 as the second tire constituent member sandwiching the RFID tag 40, as the plurality of annular tire constituent members respectively having joint parts, in which the RFID tag 40 is arranged at a position distanced by at least 30 degrees from the position of the joint part of the first tire constituent member, with the rotational axis of the tire 1 as the rotation reference, which is a position distanced by at least 30 degrees from the position of the joint part of the second tire constituent member, with the rotational axis of the tire 1 as the rotation reference. It thereby becomes possible to distance the electronic component from the joint parts of the first tire constituent member and second tire constituent member sandwiching the RFID tag 40, and it is possible to secure favorable uniformity.

(21) The tire 1 according to the present embodiment includes the tread rubber having a joint part formed by one end side and another end side of the member being joined, and the RFID tag 40 as an electronic component arranged in the vicinity of the tread rubber, in which the electronic component is arranged at a position distanced by at least 30 degrees from the joint part of the tread rubber, with the rotational axis O of the tire 1 as the rotation reference. For example, the tire 1 includes the tread rubber having a joint part formed by one end side and another end side of the member being joined, and the RFID tag 40 as an electronic component arranged in the vicinity of the tread rubber, in which the electronic component is arranged at a position distanced by at least 120 degrees from the joint part of the tread rubber, with the rotational axis O of the tire 1 as the rotation reference. In this way, in the case of arranging an electronic component in the vicinity of the tread rubber 28, by arranging the electronic component to be distanced from the joint part of the tread rubber 28, it is possible to secure favorable uniformity. It should be noted that the configurations of the above-mentioned (19) to (21) can obtain the effect of securing favorable uniformity even by each independent configuration.

### <Third Embodiment>

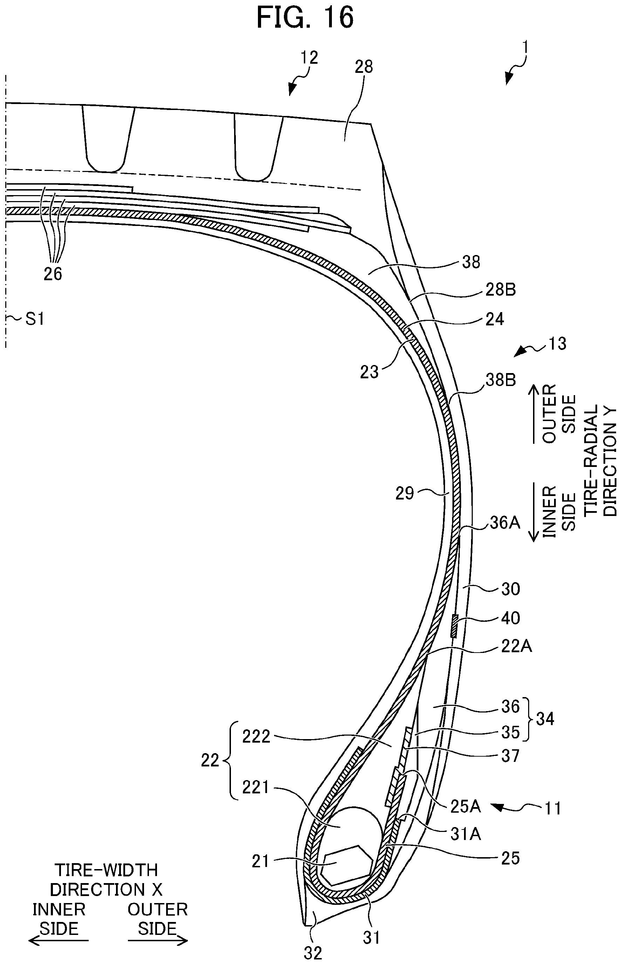

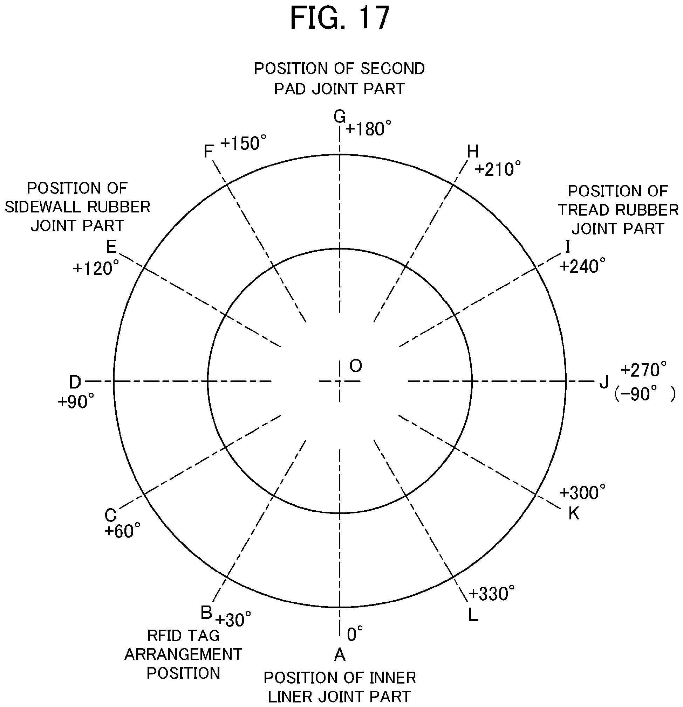

Next, a tire according to a third embodiment will be explained while referencing FIGS. 16 and 17. It should be noted that the same reference symbols will be attached for the same configurations as the first embodiment in the following explanation, and detailed explanations thereof will be omitted.

In the present embodiment, as shown in FIG. 16, the RFID tag 40 is arranged between the sidewall rubber 30 and the second pad 36. Then, at least the inner liner 29, tread rubber 28, sidewall rubber 30 and second pad 36 among the tire constituent members of the present embodiment are annular tire constituent members respectively having a joint part formed by one end side and another end side of an elongated member being joined.

FIG. 17 is a view simplifying to show a relationship between the positions of the joint parts of the plurality of tire constituent members of the present embodiment and the arrangement position of the RFID tag 40. In the present embodiment, the RFID tag 40 is arranged at the position B of +30 degrees, as the position within the range less than +/-90 degrees. Also in this case, it is possible to secure suitable uniformity, while arranging the joint part of the tire constituent member with a high degree of freedom.

In the present embodiment, the joint part of the inner liner 29, joint part of the sidewall rubber 30 and joint part of the tread rubber 28 which have great influence on the uniformity of the tire overall are evenly distributed at intervals of 120 degrees. More specifically, when setting the position of the joint part of the inner liner 29 as the position A of 0 degrees, the joint part of the sidewall rubber 30 is arranged at the position E of +120 degrees, and the joint part of the tread rubber 28 is arranged at the position I of +240 degrees. Consequently, the overall uniformity becomes very favorable. Then, the joint part of the second pad is arranged at the position G of +180 degrees.

According to the above configuration, the RFID tag 40 is arranged to be distanced by at least 30 degrees, at least 90 degrees in the present embodiment, from the joint part of the sidewall rubber 30 as the first tire constituent member sandwiching the RFID tag 40 and the joint part of the second pad 36 as the second tire constituent member sandwiching the RFID tag 40. It is thereby possible to prevent deterioration in uniformity due to embedding the RFID tag 40.

In the above way, also in the case of the present embodiment, by arranging the RFID tag 40 at a position within a range less than +/-90 degrees, i.e. the position B of +30 degrees, it is possible to raise the degrees of freedom in arrangement positions of the joint parts of tire constituent members, while securing favorable uniformity.

According to the tire related to the present embodiment, the following effects are exerted in addition to the above-mentioned (1) to (18).

(22) The tire 1 according to the present embodiment includes the sidewall rubber 30 as the first tire constituent member and the second pad 36 as the second tire constituent member sandwiching the RFID tag 40, as the plurality of annular tire constituent members respectively having joint parts, in which the RFID tag 40 is arranged at a position distanced by at least 30 degrees from the position of the joint part of the first tire constituent member, with the rotational axis O of the tire 1 as the rotation reference, which is a position distanced by at least 30 degrees from the position of the joint part of the second tire constituent member, with the rotational axis of the tire 1 as the rotation reference. It thereby becomes possible to distance the RFID tag 40 from the joint parts of the first tire constituent member and second tire constituent member sandwiching the RFID tag 40, and it is possible to secure favorable uniformity.

### <Fourth Embodiment>

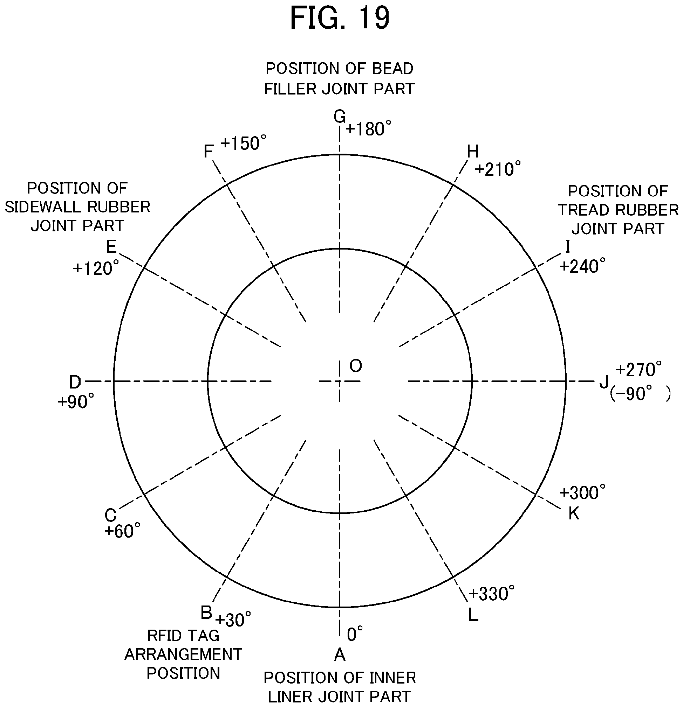

Next, a tire 2 according to a fourth embodiment will be explained while referencing FIGS. 18 and 19. It should be noted that the same reference symbols will be attached for the same configurations as the first embodiment in the following explanation, and detailed explanations thereof will be omitted.

A tire 2 of the present embodiment is a tire which is favorable as a tire of a passenger car or the like, for example, and there are portions for which the configuration differs from the tire 1 of the first embodiment, as shown in FIG. 18. Also in a tire having such a different configuration, so long as adopting an embodiment such as that disclosed in the first embodiment, i.e. embodiment arranging the RFID tag 40 at a position with a range less than +/-90 degrees, it is possible to obtain similar effects as the first embodiment, such as raising the degrees of freedom in the arrangement positions of joint parts of tire constituent members.

For example, the tire 2 of the present embodiment, due to assuming mainly to use in a passenger vehicle having small relative load bearing, does not include the pad member 34 (first pad 35, second pad 36), rubber sheet 37 and shoulder pad 38. Then, the bead filler 22 becomes integral, without dividing into the first bead filler 221 and second bead filler 222. The carcass ply 23 is configured by an insulated organic fiber cord such as polyester or polyamide, or the like, and is covered by rubber. In addition, the chafer 31 is configured from rubber into which fibers are kneaded, or rubber of high modulus. Then, the rim strip rubber 32 is arranged at the outer side in the tire-width direction of the ply folding part 25 and chafer 31. The tread 12 includes the cap ply 27 as a belt reinforcement layer provided at the outer side in the tire-radial direction of the steel belt 26. The cap ply 27 is configured by rubber coating an insulative organic fiber layer such as of polyamide fibers. By providing the cap ply 27, it is possible to achieve an improvement in durability and reduction in road noise while traveling. In this way, the tire 2 of the present embodiment has portions of different structure from the tire 1 of the first embodiment.

In the present embodiment, as shown in FIG. 18, the RFID tag 40 is arranged in the vicinity of the bead filler 22. More specifically, the RFID tag 40 is arranged between the bead filler 22 and the ply folding part 25 of the carcass ply 23. Then, at least the inner liner 29, tread rubber 28, sidewall rubber 30 and bead filler 22 among the tire constituent members of the present embodiment are annular tire constituent members respectively having a joint part formed by one end side and another end side of the elongated member being joined.

FIG. 19 is a view simplifying to show a relationship between the positions of the joint parts of the plurality of tire constituent members of the present embodiment and the arrangement position of the RFID tag 40. In the present embodiment, the RFID tag 40 is arranged at the position B of +30 degrees, as the position within the range less than +/-90 degrees. Also in this case, it is possible to secure favorable uniformity, while arranging the joint part of the tire constituent member with a high degree of freedom.

In the present embodiment, the joint part of the inner liner 29, joint part of the sidewall rubber 30 and joint part of the tread rubber 28 which have great influence on the uniformity of the tire overall are evenly distributed at intervals of 120 degrees. More specifically, when setting the position of the joint part of the inner liner 29 as the position A of 0 degrees, the joint part of the sidewall rubber 30 is arranged at the position E of +120 degrees, and the joint part of the tread rubber 28 is arranged at the position I of +240 degrees. Consequently, the overall uniformity becomes very favorable. Then, the joint part of the bead filler 22 is arranged at the position G of +180 degrees.

According to the above configuration, the RFID tag 40 is arranged to be distanced by at least 30 degrees, at least 150 degrees in the present embodiment, from the joint part of the bead filler 22 as the first tire constituent member contacting the RFID tag 40. It is thereby possible to prevent deterioration in uniformity due to embedding the RFID tag 40.

In the above way, also in the tire 2 of the present embodiment, by arranging the RFID tag 40 at a position within a range less than +/-90 degrees, i.e. the position B of +30 degrees, it is possible to raise the degrees of freedom in arrangement positions of the joint parts of tire constituent members, while securing favorable uniformity.

According to the tire related to the present embodiment, the following effects are exerted in addition to the above-mentioned (1) to (18).

(23) The tire 2 of the present embodiment includes the bead filler 22 as a plurality of annular tire constituent members respective having joint parts, in which the RFID tag 40 is arranged in the vicinity of the bead filler 22, and the RFID tag 40 is arranged at a position distanced by at least 30 degrees from the position of the joint part of the bead filler 22, with the rotational axis O of the tire 2 as the rotation reference. In this way, in the case of arranging the RFID tag 40 in the vicinity of the bead filler 22, it is possible to secure favorable uniformity, by arranging the RFID tag 40 to be distanced from the joint part of the bead filler 22.

(24) The tire 2 according to the present embodiment includes the bead filler 22 as the first tire constituent member and the carcass ply 23 as the second tire constituent member sandwiching the RFID tag 40, as the plurality of annular tire constituent members respectively having joint parts, in which the RFID tag 40 is arranged at a position distanced by at least 30 degrees from the position of the joint part of the first tire constituent member, with the rotational axis O of the tire 2 as the rotation reference, which is a position distanced by at least 30 degrees from the position of the joint part of the second tire constituent member, with the rotational axis O of the tire 2 as the rotation reference. In this way, by distancing the RFID tag 40 from the joint parts of the first tire constituent member and second tire constituent member sandwiching the RFID tag 40, it is possible to ensure favorable uniformity.

### <Fifth Embodiment>

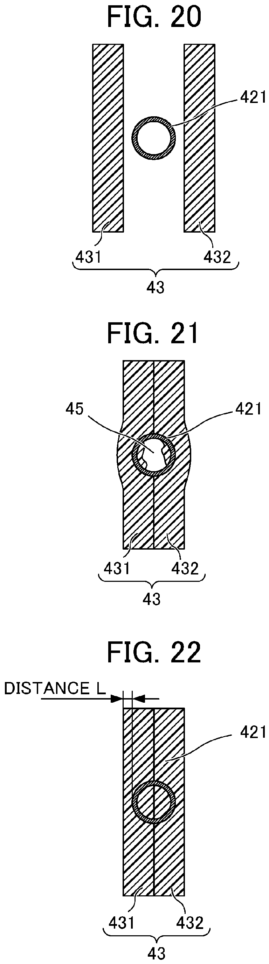

Next, a tire according to a fifth embodiment will be explained while referencing FIGS. 20 to 26. It should be noted that the same reference symbol will be attached for the same configurations as the first to fourth embodiments in the following explanation, and detailed explanations thereof will be omitted. The present embodiment is a particularly favorable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

In the present embodiment, prior to interposing the RFID tag 40 by the two coating rubber sheets 431, 432 constituting the protective member 43, the rubber is arranged within the spring antenna 421. More preferably, rubber is filled into the spring antenna, so that air will not remain as much as possible. This process and the reason for adopting this process will be explained using FIGS. 20 to 26.

First, a state of the surroundings of the RFID tag 40 in a case of not filling rubber into the spring antenna 421 will be explained as a reference example using FIGS. 20 to 22. FIG. 20 is a view showing a cross section of the spring antenna 421, and coating rubber sheets 431, 432, prior to interposing the RFID tag 40 by the coating rubber sheets 431, 432. FIG. 21 is a view showing a cross section of the spring antenna 421, and coating rubber sheets 431, 432, after interposing the RFID tag 40 by the coating rubber sheets 431, 432.

As shown in FIG. 21, in this reference example, since rubber is not filled into the spring antenna 421 in advance, a certain amount of air 45 may remain within the spring antenna 421 after interposing by the coating rubber sheets 431, 432. If air remains in this way, the integrity of the coating rubber sheets 431, 432 and the spring antenna 421 becomes insufficient, and when the tire deforms, there is concern over the spring antenna 421 not following the motion of the rubber, and the RFID tag 40 having the spring antenna 421 being damaged.

It should be noted that raw rubber before vulcanization is used as the coating rubber sheets 431, 432 herein. Consequently, by pushing the coating rubber sheets 431, 432 from both sides, the coating rubber sheets 431, 432 sticks to some extent inside the spring antenna as shown in FIG. 21. However, very large amounts of time and labor are required in order to stick the coating rubber sheets 431, 432 until the inside of the spring antenna is completely embedded.

Then, even if assuming a case of taking time and sticking the rubber sheets until the inside of the spring antenna is embedded, the distance L between the outer circumferential part of the spring antenna 421 and the outer surface of the coating rubber sheets 431, 432 becomes very short, as shown in FIG. 22. In addition, it is difficult to stabilize this distance L, and locally thin portions can occur. Consequently, the protection of the RFID tag 40 by the coating rubber sheets 431, 432 becomes insufficient, and during vulcanization, there is a possibility of the coating rubber sheets 431, 432 being damaged.

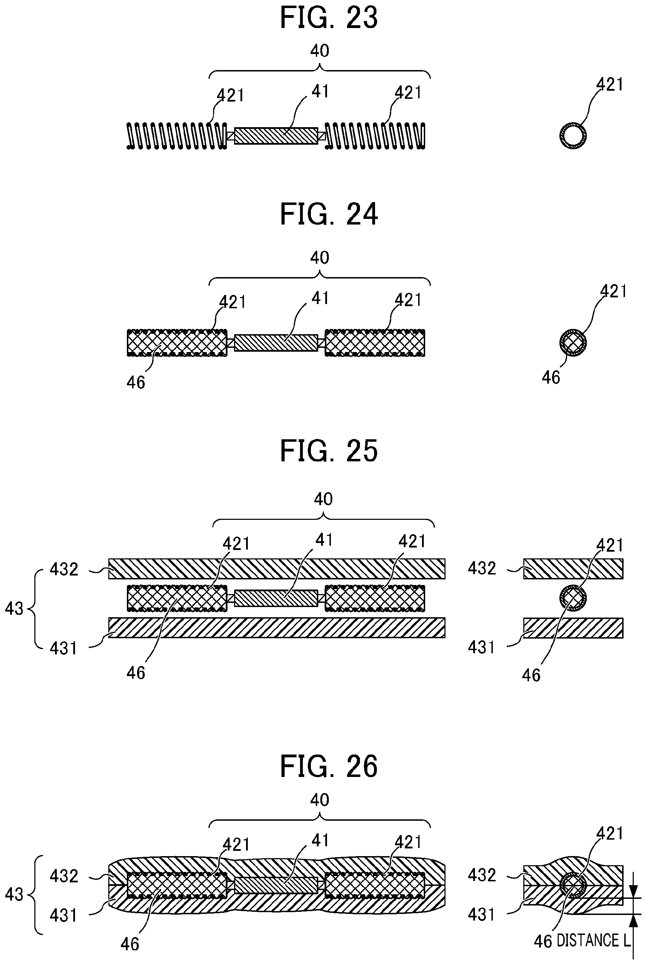

Therefore, in the present embodiment, prior to interposing the RFID tag 40 by the coating rubber sheets 431, 432, the rubber is arranged within the spring antenna 421, as shown in FIGS. 23 to 26. More preferably, rubber is filled within the spring antenna so that air does not remain as much as possible. It should be noted that the views shown on the right sides of FIGS. 23 to 26 are views showing a transverse section of the spring antenna 421 and the surrounding thereof.

FIG. 23 is a view showing a state prior to filling the rubber 46 into the spring antenna 421, and FIG. 24 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the coating rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421. In the above way, in the step of arranging rubber in the spring antenna 421, since rubber is filled only into the spring antenna 421 without pouring rubber in the periphery of the RFID chip 41, it is possible to configure the RFID tag 40 sandwiched by the coating rubber sheets 431, 432 compactly, even when sandwiching the RFID tag 40 by the coating rubber sheets 431, 432 in a subsequent step.

Herein, rubber having flexibility is used as the rubber 46 in order to ensure the flexibility of the spring antenna 421. However, it is preferable to use rubber of a modulus higher than the coating rubber sheets 431, 432 as the rubber 46, in consideration of the workability, etc. It should be noted that preferably unvulcanized rubber is used as the rubber 46 arranged within the spring antenna 421. By establishing the rubber 46 and coating rubber sheets 431, 432 as unvulcanized rubber and vulcanizing simultaneously, the integrity of the rubber 46, coating rubber sheets 431, 432 and spring antenna 421 rises. In addition, the rubber 46, and coating rubber sheets 431, 432 are more preferably established as the same type of rubber. It should be noted that, by emphasizing the flexibility of the spring antenna 421, rubber of lower modulus than the coating rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 25 is a view showing a state prior to interposing the RFID tag 40 into which the rubber 46 is filled in the spring antenna 421, by the coating rubber sheets 431, 432, and FIG. 26 is a view showing a state after interposing by the coating rubber sheets 431, 432.

As shown in FIG. 26, according to the present embodiment, since the rubber 46 is filled in advance into the spring antenna 421, no air pockets exist between the coating rubber sheets 431, 432. Consequently, since it is unnecessary to be concerned over air pockets, the process of interposing the RFID tag 40 by the coating rubber sheets 431, 432 also becomes easy. In addition, by the rubber 46 being arranged within the spring antenna 421, the integrity of the spring antenna 421, rubber 46, and coating rubber sheets 431, 432 rises, and when the tire deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the coating rubber sheets 431, 432 stabilizes. In other words, a distance close to the thickness of the coating rubber sheets 431, 432 is generally secured as this distance L. Consequently, the RFID tag 40 is sufficiently protected by the coating rubber sheets 431, 432. In the present embodiment, the RFID tag 40 interposed by the coating rubber sheets 431, 432 is fixedly set up between tire constituent members, and subsequently, the green tire is vulcanized.

It should be noted that, in the present embodiment, the RFID tag 40 into which the rubber 46 was filled in advance within the spring antenna 421 is arranged so as to be sandwiched between the bead filler 22 and rubber sheet 37 upon being covered by the coating rubber sheets 431, 432. However, the RFID tag 40 in which the rubber 46 was filled in advance into the spring antenna 421 may be arranged between tire constituent members, without covering by the coating rubber sheets 431, 432. By arranging the uncoated RFID tag 40 directly between the tire constituent members in this way, the fluctuation in thickness of the rubber member at a portion interposing the RFID tag 40 decreases, and thus the uniformity of the tire improves. In addition, since the rubber 46 is filled into the spring antenna 421 in advance, the surrounding tire constituent members will not excessively sink into the spring antenna.

According to the tire related to the present embodiment, the following effects are exerted in addition to the above-mentioned (1) to (24).

(25) In the present embodiment, the RFID tag 40 serving as an electronic component having a communication function has a spring antenna 421, and includes a step of arranging the rubber 46 into the spring antenna 421, prior to the step of pasting the RFID tag 40 to the bead filler 22 or rubber sheet 37. Upon the step of interposing the spring antenna 421 of the RFID tag 40 between tire constituent members, since it becomes unnecessary to be concerned over air pockets, the assembly property becomes favorable.

(26) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the coating rubber sheets 431, 432, and a disposing step of disposing the RFID tag 40 interposed by the coating rubber sheets 431, 432 between tire constituent members. The air 45 will thereby not remain inside the spring antenna 421. In addition, since it is unnecessary to be concerned about air pockets, the work of interposing the RFID tag 40 by the coating rubber sheets 431, 432 also becomes sample. In addition, since the distance L between the outer circumferential part of the spring antenna 421 and the outer surface of the rubber sheets 431, 432 is stabilized, the RFID tag 40 is sufficiently protected by the coating rubber sheets 431, 432.

(27) The present embodiment includes a step of arranging the rubber 46 into the spring antenna 421 of the RFID tag 40 serving as an electronic component having a communication function, and a step of pasting the rubber sheet 37 to the bead filler 22, so as to sandwich the uncoated RFID tag 40 between tire constituent members. By arranging the uncoated electronic component directly between the tire constituent members in this way, the fluctuation in thickness of the rubber member at a portion interposing the RFID tag 40 decreases, and thus the uniformity of the tire improves. In addition, since the rubber 46 is filled into the spring antenna 421 in advance, the surrounding tire constituent members will not excessively sink into the spring antenna.

It should be noted that, although the tire of the present invention can be adopted as various types of tires such as for cars, light trucks, trucks and buses, it is particularly suitable as a tire of a truck, bus, etc. It should be noted that the present invention is not to be limited to the above-mentioned embodiments, and that even when carrying out modifications, improvements, etc. within a scope of the appended claims, it is encompassed by the scope of the present invention.

### EXPLANATION OF REFERENCE NUMERALS

1, 2 tire
11 bead
12 tread
13 sidewall
21 bead core
22 bead filler
221 first bead filler
222 second bead filler
222C joint part
222E1 one end side
222E2 other end side
23 carcass ply
24 ply body
25 ply folding part
25A folding end
26 steel belt
28 tread rubber
29 inner liner
30 sidewall rubber
31 steel chafer
34 pad member
35 first pad
36 second pad
37 rubber sheet
37C joint part
37E1 one end side
37E2 other end side
40 RFID tag (electronic component)
41 RFID chip
42 antenna
421 spring antenna
43 protective member (coating rubber)
431, 432 coating rubber sheet
46 rubber

## Claims

1. A tire (1) comprising:
a plurality of annular tire constituent members respectively having a joint part formed by one end side and another end side of a member being joined; and
an electronic component (40),
wherein the plurality of annular tire constituent members respectively having the joint part includes an inner liner (29) covering a tire inner cavity surface, and at least two tire constituent members different from the inner liner (29), and
wherein the electronic component (40) is disposed at a position distanced by at least 15 degrees around a tire rotational axis, with a position of the joint part of the inner liner (29) as a reference,
wherein the electronic component (40) is disposed within a range of 45 degrees or less around a tire rotational axis, with a position of the joint part of the inner liner (29) as a reference.

2. A tire (1) comprising:
a plurality of annular tire constituent members respectively having a joint part formed by one end side and another end side of a member being joined; and
an electronic component (40),
wherein the plurality of annular tire constituent members respectively having the joint part includes an inner liner (29) covering a tire inner cavity surface, and at least two tire constituent members different from the inner liner (29), and
wherein the electronic component (40) is disposed within a range less than 90 degrees around a tire rotational axis, with a position of the joint part of the inner liner (29) as a reference,
wherein the electronic component (40) is disposed at a position distanced by at least 15 degrees around a tire rotational axis, with a position of the joint part of the inner liner (29) as a reference,
wherein the plurality of annular tire constituent members respectively having the joint part includes a first tire constituent member contacted by the electronic component (40), the first tire constituent member being different from the inner liner (29), and
wherein the electronic component (40) is disposed at a position distanced by at least 30 degrees from a position of the joint part of the first tire constituent member, with the rotational axis of the tire as a rotation reference.

3. A tire (1) comprising:
a plurality of annular tire constituent members respectively having a joint part formed by one end side and another end side of a member being joined; and
an electronic component (40),
wherein the plurality of annular tire constituent members respectively having the joint part includes an inner liner (29) covering a tire inner cavity surface, and at least two tire constituent members different from the inner liner (29), and
wherein the electronic component (40) is disposed within a range less than 90 degrees around a tire rotational axis, with a position of the joint part of the inner liner (29) as a reference,
wherein the electronic component (40) is disposed at a position distanced by at least 15 degrees around a tire rotational axis, with a position of the joint part of the inner liner (29) as a reference,
wherein the plurality of annular tire constituent members respective having the joint part includes an inner liner (29), sidewall rubber (30) and tread rubber (28), and a joint part of the inner liner (29), a joint part of the sidewall rubber (30) and a joint part of the tread rubber (28) are disposed at intervals of at least 90 degrees with the rotational axis of the tire as the rotation reference, and
wherein the electronic component (40) is disposed to be distanced by at least 30 degrees, with the rotational axis of the tire as the rotation reference, from a closest joint part among the joint part of the sidewall rubber (30) and the joint part of the tread rubber (28).

4. The tire (1) according to claim 2 or 3, wherein the electronic component (40) is disposed within a range of 80 degrees or less around a tire rotational axis, with a position of the joint part of the inner liner (29) as a reference.

5. The tire (1) according to claim 2 or 3, wherein the electronic component (40) is disposed within a range of 60 degrees or less around a tire rotational axis, with a position of the joint part of the inner liner (29) as a reference.

6. The tire (1) according to any one of claims 1 to 5, wherein the plurality of tire constituent members respectively having the joint part includes a bead filler (22), and
wherein the electronic component (40) is disposed at a position distanced by at least 30 degrees from a position of the joint part of the bead filler (22), with the rotational axis of the tire as a rotation reference.

7. The tire (1) according to any one of claims 1 to 5, wherein the plurality of tire constituent members respectively having the joint part includes tread rubber (28), and
wherein the electronic component (40) is disposed at a position distanced by at least 30 degrees from a position of the joint part of the tread rubber (28), with the rotational axis of the tire as a rotation reference.

8. The tire (1) according to any one of claims 1 to 5, wherein the plurality of tire constituent members respectively having the joint part includes a first tire constituent member contacted by the electronic component (40), the first tire constituent member being different from the inner liner (29), and
wherein the electronic component (40) is disposed at a position distanced by at least 120 degrees from a position of the joint part of the first tire constituent member, with the rotational axis of the tire as a rotation reference.

9. A manufacturing method of a tire (1) including a plurality of annular tire constituent members respectively having a joint part formed by one end side and another end side of a member being joined, and an electronic component (40), wherein the plurality of annular tire constituent members respectively having the joint part include an inner liner (29) covering a tire inner cavity surface and at least two tire constituent members different from the inner liner (29), the method comprising a step of
disposing the electronic component (40),
wherein the step of disposing disposes the electronic component (40) at a position distanced by at least 15 degrees around a tire rotational axis, with a position of the joint part of the inner liner (29) as a reference,
wherein the step of disposing disposes the electronic component (40) within a range of no more than 45 degrees around a tire rotational axis, with a position of the joint part of the inner liner (29) as a reference.

10. A manufacturing method of a tire (1) including a plurality of annular tire constituent members respectively having a joint part formed by one end side and another end side of a member being joined, and an electronic component (40), wherein the plurality of annular tire constituent members respectively having the joint part include an inner liner (29) covering a tire inner cavity surface and at least two tire constituent members different from the inner liner (29), the method comprising a step of
disposing the electronic component (40) within a range less than 90 degrees around a tire rotational axis, with a position of the joint part of the inner liner (29) as a reference,
wherein the step of disposing disposes the electronic component (40) at a position distanced by at least 15 degrees around a tire rotational axis, with a position of the joint part of the inner liner (29) as a reference, wherein the plurality of annular tire constituent members respectively having the joint part includes a first tire constituent member contacted by the electronic component (40), the first tire constituent member being different from the inner liner (29), and
wherein the electronic component (40) is disposed at a position distanced by at least 30 degrees from a position of the joint part of the first tire constituent member, with the rotational axis of the tire as a rotation reference.

11. A manufacturing method of a tire (1) including a plurality of annular tire constituent members respectively having a joint part formed by one end side and another end side of a member being joined, and an electronic component (40), wherein the plurality of annular tire constituent members respectively having the joint part include an inner liner (29) covering a tire inner cavity surface and at least two tire constituent members different from the inner liner (29), the method comprising a step of
disposing the electronic component (40) within a range less than 90 degrees around a tire rotational axis, with a position of the joint part of the inner liner (29) as a reference, wherein the step of disposing disposes the electronic component (40) at a position distanced by at least 15 degrees around a tire rotational axis, with a position of the joint part of the inner liner (29) as a reference,
wherein the plurality of annular tire constituent members respective having the joint part includes the inner liner (29), sidewall rubber (30) and tread rubber (28), and a joint part of the inner liner (29), a joint part of the sidewall rubber (30) and a joint part of the tread rubber (28) are disposed at intervals of at least 90 degrees with the rotational axis of the tire as the rotation reference, and
wherein the electronic component (40) is disposed to be distanced by at least 30 degrees, with the rotational axis of the tire as the rotation reference, from a closest joint part among the joint part of the sidewall rubber (30) and the joint part of the tread rubber (28).

12. The manufacturing method of a tire (1) according to claim 10 or 11, wherein the step of disposing disposes the electronic component (40) within a range of no more than 80 degrees around a tire rotational axis, with a position of the joint part of the inner liner (29) as a reference.

13. The manufacturing method of a tire (1) according to claim 10 or 11, wherein the step of disposing disposes the electronic component (40) within a range of no more than 60 degrees around a tire rotational axis, with a position of the joint part of the inner liner (29) as a reference.

## Patentansprüche

1. Reifen (1) umfassend:
eine Vielzahl von ringförmigen Reifenbestandteilen, die jeweils einen Verbindungsteil aufweisen, der durch eine Endseite und eine andere Endseite eines Elements gebildet ist, die verbunden sind; und
eine elektronische Komponente (40),
wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhaltet, und
wobei die elektronische Komponente (40) in einer Position, die um mindestens 15 Grad um eine Reifenrotationsachse beabstandet ist, mit einer Position des Verbindungsteils der inneren Auskleidung (29) als eine Referenz angeordnet ist,
wobei die elektronische Komponente (40) innerhalb eines Bereichs von 45 Grad oder weniger um eine Reifenrotationsachse mit einer Position des Verbindungsteils der inneren Auskleidung (29) als eine Referenz angeordnet ist.

2. Reifen (1) umfassend:
eine Vielzahl von ringförmigen Reifenbestandteilen, die jeweils einen Verbindungsteil aufweisen, der durch eine Endseite und eine andere Endseite eines Elements gebildet ist, die verbunden sind; und
eine elektronische Komponente (40),
wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhaltet, und
wobei die elektronische Komponente (40) innerhalb eines Bereichs von weniger als 90 Grad um eine Reifenrotationsachse mit einer Position des Verbindungsteils der inneren Auskleidung (29) als eine Referenz angeordnet ist,
wobei die elektronische Komponente (40) in einer Position, die um mindestens 15 Grad um eine Reifenrotationsachse beabstandet ist, mit einer Position des Verbindungsteils der inneren Auskleidung (29) als eine Referenz angeordnet ist,
wobei die elektronische Komponente (40) in einer Position, die um mindestens 15 Grad um eine Reifenrotationsachse beabstandet ist, mit einer Position des Verbindungsteils der inneren Auskleidung (29) als eine Referenz angeordnet ist,
wobei die Vielzahl von ringförmigen Reifenbestandteilen, die jeweils den Verbindungsteil aufweisen, einen ersten Reifenbestandteil beinhalten, der von der elektronischen Komponente (40) berührt wird, wobei sich der erste Reifenbestandteil von der inneren Auskleidung (29) unterscheidet, und
wobei die elektronische Komponente (40) in einer Position, die um mindestens 30 Grad von einer Position des Verbindungsteils des ersten Reifenbestandteils beabstandet ist, mit der Rotationsachse des Reifens als eine Rotationsreferenz angeordnet ist.

3. Reifen (1) umfassend:
eine Vielzahl von ringförmigen Reifenbestandteilen, die jeweils einen Verbindungsteil aufweisen, der durch eine Endseite und eine andere Endseite eines Elements gebildet ist, die verbunden sind; und
eine elektronische Komponente (40),
wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhaltet, und
wobei die elektronische Komponente (40) innerhalb eines Bereichs von weniger als 90 Grad um eine Reifenrotationsachse mit einer Position des Verbindungsteils der inneren Auskleidung (29) als eine Referenz angeordnet ist,
wobei die elektronische Komponente (40) in einer Position, die um mindestens 15 Grad um eine Reifenrotationsachse beabstandet ist, mit einer Position des Verbindungsteils der inneren Auskleidung (29) als eine Referenz angeordnet ist,
wobei die Vielzahl von ringförmigen Reifenbestandteilen, die jeweils den Verbindungsteil aufweisen, eine innere Auskleidung (29), einen Seitenwandgummi (30) und einen Laufflächengummi (28) beinhaltet, und ein Verbindungsteil der inneren Auskleidung (29), ein Verbindungsteil des Seitenwandgummis (30) und ein Verbindungsteil des Laufflächengummis (28) in Intervallen von mindestens 90 Grad mit der Rotationsachse des Reifens als die Rotationsreferenz angeordnet sind, und
wobei die elektronische Komponente (40) so angeordnet ist, dass sie, mit der Rotationsachse des Reifens als die Rotationsreferenz, um mindestens 30 Grad von einem nächsten Verbindungsteil unter dem Verbindungsteil des Seitenwandgummis (30) und dem Verbindungsteil des Laufflächengummis (28) beabstandet ist.

4. Reifen (1) nach Anspruch 2 oder 3, wobei die elektronische Komponente (40) innerhalb eines Bereichs von 80 Grad oder weniger um eine Reifenrotationsachse mit einer Position des Verbindungsteils der inneren Auskleidung (29) als eine Referenz angeordnet ist.

5. Reifen (1) nach Anspruch 2 oder 3, wobei die elektronische Komponente (40) innerhalb eines Bereichs von 60 Grad oder weniger um eine Reifenrotationsachse mit einer Position des Verbindungsteils der inneren Auskleidung (29) als eine Referenz angeordnet ist.

6. Reifen (1) nach einem der Ansprüche 1 bis 5, wobei die Vielzahl von Reifenbestandteilen, die jeweils den Verbindungsteil aufweisen, einen Wulstfüller (22) beinhaltet, und
wobei die elektronische Komponente (40) in einer Position, die um mindestens 30 Grad von einer Position des Verbindungsteils des Wulstfüllers (22) beabstandet ist, mit der Rotationsachse des Reifens als eine Rotationsreferenz angeordnet ist.

7. Reifen (1) nach einem der Ansprüche 1 bis 5, wobei die Vielzahl von Reifenbestandteilen, die jeweils den Verbindungsteil aufweisen, einen Laufflächengummi (28) beinhaltet, und
wobei die elektronische Komponente (40) in einer Position, die um mindestens 30 Grad von einer Position des Verbindungsteils des Laufflächengummis (28) beabstandet ist, mit der Rotationsachse des Reifens als eine Rotationsreferenz angeordnet ist.

8. Reifen (1) nach einem der Ansprüche 1 bis 5, wobei die Vielzahl von Reifenbestandteilen, die jeweils den Verbindungsteil aufweisen, einen ersten Reifenbestandteil beinhaltet, der von der elektronischen Komponente (40) berührt wird, wobei sich der erste Reifenbestandteil von der inneren Auskleidung (29) unterscheidet, und
wobei die elektronische Komponente (40) in einer Position, die um mindestens 120 Grad von einer Position des Verbindungsteils des ersten Reifenbestandteils beabstandet ist, mit der Rotationsachse des Reifens als eine Rotationsreferenz angeordnet ist.

9. Herstellungsverfahren eines Reifens (1) einschließlich einer Vielzahl von ringförmigen Reifenbestandteilen, die jeweils einen Verbindungsteil aufweisen, der durch eine Endseite und eine andere Endseite eines Elements gebildet ist, die verbunden sind, und einer elektronischen Komponente (40), wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhalten, wobei das Verfahren einen Schritt des Anordnens der elektronischen Komponente (40) umfasst,
wobei der Schritt des Anordnens die elektronische Komponente (40) in einer Position, die um mindestens 15 Grad um eine Reifenrotationsachse beabstandet ist, mit einer Position des Verbindungsteils der inneren Auskleidung (29) als eine Referenz anordnet,
wobei der Schritt des Anordnens die elektronische Komponente (40) innerhalb eines Bereichs von nicht mehr als 45 Grad um eine Reifenrotationsachse mit einer Position des Verbindungsteils der inneren Auskleidung (29) als eine Referenz anordnet.

10. Herstellungsverfahren eines Reifens (1) einschließlich einer Vielzahl von ringförmigen Reifenbestandteilen, die jeweils einen Verbindungsteil aufweisen, der durch eine Endseite und eine andere Endseite eines Elements gebildet ist, die verbunden sind, und einer elektronischen Komponente (40), wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhalten, wobei das Verfahren einen Schritt des
Anordnens der elektronischen Komponente (40) innerhalb eines Bereichs von weniger als 90 Grad um eine Reifenrotationsachse mit einer Position des Verbindungsteils der inneren Auskleidung (29) als eine Referenz, umfasst,
wobei der Schritt des Anordnens die elektronische Komponente (40) in einer Position, die um mindestens 15 Grad um eine Reifenrotationsachse beabstandet ist, mit einer Position des Verbindungsteils der inneren Auskleidung (29) als eine Referenz anordnet, wobei die Vielzahl von ringförmigen Reifenbestandteilen, die jeweils den Verbindungsteil aufweisen, einen ersten Reifenbestandteil beinhaltet, der von der elektronischen Komponente (40) berührt wird, wobei sich der erste Reifenbestandteil von der inneren Auskleidung (29) unterscheidet, und
wobei die elektronische Komponente (40) in einer Position, die um mindestens 30 Grad von einer Position des Verbindungsteils des ersten Reifenbestandteils beabstandet ist, mit der Rotationsachse des Reifens als eine Rotationsreferenz angeordnet ist.

11. Herstellungsverfahren eines Reifens (1) einschließlich einer Vielzahl von ringförmigen Reifenbestandteilen, die jeweils einen Verbindungsteil aufweisen, der durch eine Endseite und eine andere Endseite eines Elements gebildet ist, die verbunden sind, und einer elektronischen Komponente (40), wobei die Vielzahl von ringförmigen Reifenbestandteilen, die jeweils den Verbindungsteil aufweisen, eine innere Auskleidung (29), die eine Reifeninnenhohlraumfläche bedeckt, und mindestens zwei Reifenbestandteile, die sich von der inneren Auskleidung (29) unterscheiden, beinhalten, wobei das Verfahren einen Schritt des
Anordnens der elektronischen Komponente (40) innerhalb eines Bereichs von weniger als 90 Grad um eine Reifenrotationsachse mit einer Position des Verbindungsteils der inneren Auskleidung (29) als eine Referenz, umfasst, wobei der Schritt des Anordnens die elektronische Komponente (40) in einer Position, die um mindestens 15 Grad um eine Reifenrotationsachse beabstandet ist, mit einer Position des Verbindungsteils der inneren Auskleidung (29) als eine Referenz anordnet,
wobei die Vielzahl von ringförmigen Reifenbestandteilen, die jeweils den Verbindungsteil aufweisen, die innere Auskleidung (29), einen Seitenwandgummi (30) und einen Laufflächengummi (28) beinhaltet, und ein Verbindungsteil der inneren Auskleidung (29), ein Verbindungsteil des Seitenwandgummis (30) und ein Verbindungsteil des Laufflächengummis (28) in Intervallen von mindestens 90 Grad mit der Rotationsachse des Reifens als die Rotationsreferenz angeordnet sind, und
wobei die elektronische Komponente (40) so angeordnet ist, dass sie, mit der Rotationsachse des Reifens als die Rotationsreferenz, um mindestens 30 Grad von einem nächsten Verbindungsteil unter dem Verbindungssteil des Seitenwandgummis (30) und dem Verbindungsteil des Laufflächengummis (28) beabstandet ist.

12. Herstellungsverfahren eines Reifens (1) nach Anspruch 10 oder 11, wobei der Schritt des Anordnens die elektronische Komponente (40) innerhalb eines Bereichs von nicht mehr als 80 Grad um eine Reifenrotationsachse mit einer Position des Verbindungsteils der inneren Auskleidung (29) als eine Referenz anordnet.

13. Herstellungsverfahren eines Reifens (1) nach Anspruch 10 oder 11, wobei der Schritt des Anordnens die elektronische Komponente (40) innerhalb eines Bereichs von nicht mehr als 60 Grad um eine Reifenrotationsachse mit einer Position des Verbindungsteils der inneren Auskleidung (29) als eine Referenz anordnet.

## Revendications

1. Pneu (1) comprenant :
une pluralité d'éléments constitutifs de pneu annulaires présentant respectivement une partie de jonction formée par un côté d'extrémité et un autre côté d'extrémité d'un élément joint ; et
un composant électronique (40),
dans lequel la pluralité d'éléments constitutifs de pneu annulaires présentant respectivement la partie de jonction comporte un revêtement intérieur (29) recouvrant une surface de cavité intérieure de pneu, et au moins deux éléments constitutifs de pneu différents du revêtement intérieur (29), et
dans lequel le composant électronique (40) est disposé sur une position espacée d'au moins 15 degrés autour d'un axe de rotation de pneu, avec une position de la partie de jonction du revêtement intérieur (29) comme référence,
dans lequel le composant électronique (40) est disposé dans une plage inférieure ou égale à 45 degrés autour d'un axe de rotation de pneu, avec une position de la partie de jonction du revêtement intérieur (29) comme référence.

2. Pneu (1) comprenant :
une pluralité d'éléments constitutifs de pneu annulaires présentant respectivement une partie de jonction formée par un côté d'extrémité et un autre côté d'extrémité d'un élément joint ; et
un composant électronique (40),
dans lequel la pluralité d'éléments constitutifs de pneu annulaires présentant respectivement la partie de jonction comporte un revêtement intérieur (29) recouvrant une surface de cavité intérieure de pneu, et au moins deux éléments constitutifs de pneu différents du revêtement intérieur (29), et
dans lequel le composant électronique (40) est disposé dans une plage inférieure ou égale à 90 degrés autour d'un axe de rotation de pneu, avec une position de la partie de jonction du revêtement intérieur (29) comme référence,
dans lequel le composant électronique (40) est disposé sur une position espacée d'au moins 15 degrés autour d'un axe de rotation de pneu, avec une position de la partie de jonction du revêtement intérieur (29) comme référence,
dans lequel la pluralité d'éléments constitutifs de pneu annulaires présentant respectivement la partie de jonction comporte un premier élément constitutif de pneu mis en contact avec le composant électronique (40),
le premier élément constitutif de pneu étant différent du revêtement intérieur (29), et
dans lequel le composant électronique (40) est disposé sur une position espacée d'au moins 30 degrés d'une position de la partie de jonction du premier élément constitutif de pneu, avec l'axe de rotation du pneu comme référence de rotation.

3. Pneu (1) comprenant :
une pluralité d'éléments constitutifs de pneu annulaires présentant respectivement une partie de jonction formée par un côté d'extrémité et un autre côté d'extrémité d'un élément joint ; et
un composant électronique (40),
dans lequel la pluralité d'éléments constitutifs de pneu annulaires présentant respectivement la partie de jonction comporte un revêtement intérieur (29) recouvrant une surface de cavité intérieure de pneu, et au moins deux éléments constitutifs de pneu différents du revêtement intérieur (29), et
dans lequel le composant électronique (40) est disposé dans une plage inférieure ou égale à 90 degrés autour d'un axe de rotation de pneu, avec une position de la partie de jonction du revêtement intérieur (29) comme référence,
dans lequel le composant électronique (40) est disposé sur une position espacée d'au moins 15 degrés autour d'un axe de rotation de pneu, avec une position de la partie de jonction du revêtement intérieur (29) comme référence, dans lequel la pluralité d'éléments constitutifs de pneu annulaires présentant respectivement la partie de jonction comporte un revêtement intérieur (29), du caoutchouc de flanc (30) et du caoutchouc de bande de roulement (28), et une partie de jonction du revêtement intérieur (29), une partie de jonction du caoutchouc de flanc (30) et une partie de jonction du caoutchouc de bande de roulement (28) sont disposées à des intervalles d'au moins 90 degrés, avec l'axe de rotation du pneu comme la référence de rotation, et
dans lequel le composant électronique (40) est disposé de manière à être espacé d'au moins 30 degrés, avec l'axe de rotation du pneu comme référence de rotation, d'une partie de jonction la plus proche parmi la partie de jonction du caoutchouc de flanc (30) et la partie de jonction du caoutchouc de bande de roulement (28).

4. Pneu (1) selon la revendication 2 ou 3, dans lequel le composant électronique (40) est disposé dans une plage inférieure ou égale à 80 degrés autour d'un axe de rotation de pneu, avec une position de la partie de jonction du revêtement intérieur (29) comme référence.

5. Pneu (1) selon la revendication 2 ou 3, dans lequel le composant électronique (40) est disposé dans une plage inférieure ou égale à 60 degrés autour d'un axe de rotation de pneu, avec une position de la partie de jonction du revêtement intérieur (29) comme référence.

6. Pneu (1) selon l'une quelconque des revendications 1 à 5, dans lequel la pluralité d'éléments constitutifs de pneu présentant respectivement la partie de jonction comporte un bourrage sur tringle (22), et
dans lequel le composant électronique (40) est disposé sur une position espacée d'au moins 30 degrés d'une position de la partie de jonction du bourrage sur tringle (22), avec l'axe de rotation du pneu comme référence de rotation.

7. Pneu (1) selon l'une quelconque des revendications 1 à 5,
dans lequel la pluralité d'éléments constitutifs de pneu présentant respectivement la partie de jonction comporte du caoutchouc de bande de roulement (28), et
dans lequel le composant électronique (40) est disposé sur une position espacée d'au moins 30 degrés d'une position de la partie de jonction du caoutchouc de bande de roulement (28), avec l'axe de rotation du pneu comme référence de rotation.

8. Pneu (1) selon l'une quelconque des revendications 1 à 5,
dans lequel la pluralité d'éléments constitutifs de pneu présentant respectivement la partie de jonction comporte un premier élément constitutif de pneu mis en contact avec le composant électronique (40), le premier élément constitutif de pneu étant différent du revêtement intérieur (29), et
dans lequel le composant électronique (40) est disposé sur une position espacée d'au moins 120 degrés d'une position de la partie de jonction du premier élément constitutif de pneu, avec l'axe de rotation du pneu comme référence de rotation.

9. Procédé de fabrication d'un pneu (1) comportant une pluralité d'éléments constitutifs de pneu annulaires présentant respectivement une partie de jonction formée par un côté d'extrémité et un autre côté d'extrémité d'un élément joint, et un composant électronique (40), dans lequel la pluralité d'éléments constitutifs de pneu annulaires présentant respectivement la partie de jonction comportent un revêtement intérieur (29) recouvrant une surface de cavité intérieure de pneu et au moins deux éléments constitutifs de pneu différents du revêtement intérieur (29), le procédé comprenant une étape d'agencement du composant électronique (40),
dans lequel l'étape d'agencement dispose le composant électronique (40) sur une position espacée d'au moins 15 degrés autour d'un axe de rotation de pneu, avec une position de la partie de jonction du revêtement intérieur (29) comme référence,
dans lequel l'étape d'agencement dispose le composant électronique (40) dans une plage ne dépassant pas 45 degrés autour d'un axe de rotation de pneu, avec une position de la partie de jonction du revêtement intérieur (29) comme référence.

10. Procédé de fabrication d'un pneu (1) comportant une pluralité d'éléments constitutifs de pneu annulaires présentant respectivement une partie de jonction formée par un côté d'extrémité et un autre côté d'extrémité d'un élément joint, et un composant électronique (40), dans lequel la pluralité d'éléments constitutifs de pneu annulaires présentant respectivement la partie de jonction comportent un revêtement intérieur (29) recouvrant une surface de cavité intérieure de pneu et au moins deux éléments constitutifs de pneu différents du revêtement intérieur (29), le procédé comprenant une étape
d'agencement du composant électronique (40) dans une plage inférieure ou égale à 90 degrés autour d'un axe de rotation de pneu, avec une position de la partie de jonction du revêtement intérieur (29) comme référence,
dans lequel l'étape d'agencement dispose le composant électronique (40) sur une position espacée d'au moins 15 degrés autour d'un axe de rotation, avec une position de la partie de jonction du revêtement intérieur (29) comme référence, dans lequel la pluralité d'éléments constitutifs de pneu annulaires présentant respectivement la partie de jonction comporte un premier élément constitutif de pneu mis en contact avec le composant électronique (40), le premier élément constitutif de pneu étant différent du revêtement intérieur (29), et
dans lequel le composant électronique (40) est disposé sur une position espacée d'au moins 30 degrés d'une position de la partie de jonction du premier élément constitutif de pneu, avec l'axe de rotation du pneu en tant que référence de rotation.

11. Procédé de fabrication d'un pneu (1) comportant une pluralité d'éléments constitutifs de pneu annulaires présentant respectivement une partie de jonction formée par un côté d'extrémité et un autre côté d'extrémité d'un élément joint, et un composant électronique (40), dans lequel la pluralité d'éléments constitutifs de pneu annulaires présentant respectivement la partie de jonction comportent un revêtement intérieur (29) recouvrant une surface de cavité intérieure de pneu et au moins deux éléments constitutifs de pneu différents du revêtement intérieur (29), le procédé comprenant une étape
d'agencement du composant électronique (40) dans une plage inférieure ou égale à 90 degrés autour d'un axe de rotation de pneu, avec une position de la partie de jonction du revêtement intérieur (29) comme référence, dans lequel l'étape d'agencement dispose le composant électronique (40) sur une position espacée d'au moins 15 degrés autour d'un axe de rotation de pneu, avec une position de la partie de jonction du revêtement intérieur (29) comme référence,
dans lequel la pluralité d'éléments constitutifs de pneu annulaires présentant respectivement la partie de jonction comporte le revêtement intérieur (29) du caoutchouc de flanc (30) et du caoutchouc de bande de roulement (28), et une partie de jonction du revêtement intérieur (29), une partie de jonction du caoutchouc de flanc (30) et une partie de jonction du caoutchouc de bande de roulement (28) sont disposées à des intervalles d'au moins 90 degrés avec l'axe de rotation du pneu comme référence de rotation, et
dans lequel le composant électronique (40) est disposé de manière à être espacé d'au moins 30 degrés, avec l'axe de rotation du pneu comme la référence de rotation, d'une partie de jonction la plus proche parmi la partie de jonction du caoutchouc de flanc (30) et la partie de jonction du caoutchouc de bande de roulement (28).

12. Procédé de fabrication d'un pneu (1) selon la revendication 10 ou 11, dans lequel l'étape d'agencement dispose le composant électronique (40) dans une plage ne dépassant pas 80 degrés autour d'un axe de rotation de pneu, avec une position de la partie de jonction du revêtement intérieur (29) comme référence.

13. Procédé de fabrication d'un pneu (1) selon la revendication 10 ou 11, dans lequel l'étape d'agencement dispose le composant électronique (40) dans une plage ne dépassant pas 60 degrés autour d'un axe de rotation de pneu, avec une position de la partie de jonction du revêtement intérieur (29) comme référence.
